# EUROPEAN PATENT APPLICATION

(11) **EP 4 379 869 A1**
(43) Date of publication of application: **05.06.2024**
(21) Application number: 22849642.8
(22) Date of filing: 29.07.2022
(51) Int. Cl.: H01M 4/62, H01M 4/13, H01M 4/139, H01M 10/052, H01M 10/0566

(54) **BINDER COMPOSITION FOR NONAQUEOUS SECONDARY BATTERY ELECTRODES, SLURRY COMPOSITION FOR NONAQUEOUS SECONDARY BATTERY ELECTRODES, ELECTRODE FOR NONAQUEOUS SECONDARY BATTERIES, AND NONAQUEOUS SECONDARY BATTERY**

(30) Priority: 30.07.2021 JP 2021126233
(71) Applicant: Zeon Corporation, Tokyo 100-8246 (JP)
(72) Inventor: CHIFU, Kenichiro, Tokyo 100-8246 (JP); TANAKA, Keiichiro, Tokyo 100-8246 (JP)
(74) Representative: Maiwald GmbH
(86) International application number: PCT/JP2022/029407
(87) International publication number: WO 2023/008582

(57) **Abstract**

A binder composition for a non-aqueous secondary battery electrode contains a particulate polymer that includes an aromatic vinyl monomer unit in a proportion of not less than 5 mass% and not more than 65 mass%, an aliphatic conjugated diene monomer unit in a proportion of not less than 30 mass% and not more than 90 mass%, and a carboxyl group-containing monomer unit in a proportion of not less than 2 mass% and not more than 9 mass%. A ratio (Da/Db) of an average particle diameter Da of the particulate polymer measured by dynamic light scattering and a volume-average particle diameter Db of the particulate polymer measured by laser diffraction/scattering is not less than 1.05 and not more than 2.0. The volume-average particle diameter Db of the particulate polymer is not less than 100 nm and not more than 170 nm.

## Description

### TECHNICAL FIELD

The present disclosure relates to a binder composition for a non-aqueous secondary battery electrode, a slurry composition for a non-aqueous secondary battery electrode, an electrode for a non-aqueous secondary battery, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy-density, and the ability to be repeatedly charged and discharged, and are used in a wide range of applications. Consequently, in recent years, studies have been made to improve battery members such as electrodes for the purpose of achieving even higher non-aqueous secondary battery performance.

An electrode used in a secondary battery such as a lithium ion secondary battery normally includes a current collector and an electrode mixed material layer (positive electrode mixed material layer or negative electrode mixed material layer) formed on the current collector. This electrode mixed material layer is formed by, for example, applying a slurry composition containing an electrode active material, a binder-containing binder composition, and so forth onto the current collector, and then drying the applied slurry composition.

Particulate polymers including monomer units such as an aromatic vinyl monomer unit, an aliphatic conjugated diene monomer unit, and a carboxyl group-containing monomer unit, for example, have conventionally been used as binders contained in binder compositions.

As one example, Patent Literature (PTL) 1 discloses a binder composition containing a particulate polymer that includes an aromatic vinyl monomer unit, an aliphatic conjugated diene monomer unit, and a carboxyl group-containing monomer unit and that has a value of 2 to 10 for a ratio (DA/DB) of average particle diameter (DA) measured by dynamic light scattering and average particle diameter (DB) measured by TEM observation. PTL 1 reports that by using an electrode produced using this binder composition, it is possible to obtain an electrical storage device that displays good charge/discharge durability characteristics.

### CITATION LIST

### Patent Literature

PTL 1: WO2016/039067A1

### SUMMARY

### (Technical Problem)

It is desirable for a binder composition to have good viscousness from a viewpoint of improving binder production efficiency.

On the other hand, it is also desirable to ensure sufficiently high close adherence between an electrode mixed material layer and a current collector (i.e., peel strength of an electrode) in a situation in which an electrode mixed material layer is formed from a slurry composition containing a binder composition in order to produce an electrode.

However, with the binder composition of the conventional technique described above, it has been difficult to maintain good viscousness of the binder composition while also increasing the peel strength of an electrode that is formed using a slurry composition containing the binder composition.

Accordingly, one object of the present disclosure is to provide a binder composition for a non-aqueous secondary battery electrode that has good viscousness and is capable of forming an electrode for a non-aqueous secondary battery having excellent peel strength.

Another object of the present disclosure is to provide a slurry composition for a non-aqueous secondary battery electrode that is capable of forming an electrode for a non-aqueous secondary battery having excellent peel strength.

Yet another object of the present disclosure is to provide an electrode for a non-aqueous secondary battery having excellent peel strength and a non-aqueous secondary battery including this electrode for a non-aqueous secondary battery.

### (Solution to Problem)

The inventors conducted diligent investigation with the aim of solving the problem set forth above. The inventors discovered that with regards to a binder composition containing a particulate polymer, by setting the proportional contents of an aromatic vinyl monomer unit, an aliphatic conjugated diene monomer unit, and a carboxyl group-containing monomer unit in the particulate polymer within specific ranges, by setting a ratio (Da/Db) of an average particle diameter Da of the particulate polymer measured by dynamic light scattering and a volume-average particle diameter Db of the particulate polymer measured by laser diffraction/scattering within a specific range, and by setting the volume-average particle diameter Db of the particulate polymer within a specific range, it is possible to maintain good viscousness of the binder composition while also causing an electrode that is formed using the binder composition to display excellent peel strength. In this manner, the inventors completed the present disclosure.

Specifically, the present disclosure aims to advantageously solve the problem set forth above and provides [1] a binder composition for a non-aqueous secondary battery electrode comprising a particulate polymer, wherein the particulate polymer includes an aromatic vinyl monomer unit in a proportion of not less than 5 mass% and not more than 65 mass%, an aliphatic conjugated diene monomer unit in a proportion of not less than 30 mass% and not more than 90 mass%, and a carboxyl group-containing monomer unit in a proportion of not less than 2 mass% and not more than 9 mass%, a ratio Da/Db of an average particle diameter Da of the particulate polymer measured by dynamic light scattering and a volume-average particle diameter Db of the particulate polymer measured by laser diffraction/scattering is not less than 1.05 and not more than 2.0, and the volume-average particle diameter Db of the particulate polymer is not less than 100 nm and not more than 170 nm.

In the case of a binder composition containing a particulate polymer that includes an aromatic vinyl monomer unit, an aliphatic conjugated diene monomer unit, and a carboxyl group-containing monomer unit in specific proportions, that has a ratio (Da/Db) of average particle diameter Da measured by dynamic light scattering relative to volume-average particle diameter Db measured by laser diffraction/scattering that is within a specific range, and that has a volume-average particle diameter Db that is within a specific range in this manner, this binder composition has good viscousness and can form an electrode having excellent peel strength.

Note that a "monomer unit" of a polymer referred to in the present disclosure is a "repeating unit derived from the monomer that is included in a polymer obtained using that monomer".

Also note that the proportional content of each monomer unit in a polymer referred to in the present disclosure can be measured by ¹H-NMR.

Moreover, the average particle diameter Da and volume-average particle diameter Db of a particulate polymer referred to in the present disclosure can, more specifically, be measured by methods described in the EXAMPLES section of the present specification.

[2] In the binder composition for a non-aqueous secondary battery electrode according to the foregoing [1], the particulate polymer preferably further includes a hydrophilic monomer unit that does not include a carboxyl group.

When the particulate polymer further includes a hydrophilic monomer unit that does not include a carboxyl group, tack strength of the binder composition can be reduced.

[3] In the binder composition for a non-aqueous secondary battery electrode according to the foregoing [1] or [2], the particulate polymer preferably further includes a cross-linkable group-containing hydrophilic monomer unit.

When the particulate polymer further includes a cross-linkable group-containing hydrophilic monomer unit, tack strength of the binder composition can be reduced.

[4] The binder composition for a non-aqueous secondary battery electrode according to any one of the foregoing [1] to [3] preferably has a pH of not lower than 6 and not higher than 10.

When the pH of the binder composition is within the specific range set forth above, even better viscousness can be imparted to the binder composition, and the peel strength of an electrode that is formed using a slurry composition containing the binder composition can be further improved.

[5] The binder composition for a non-aqueous secondary battery electrode according to any one of the foregoing [1] to [4] preferably comprises an aqueous phase that contains an acidic water-soluble polymer, wherein the acidic water-soluble polymer has a weight-average molecular weight of not less than 500 and not more than 20,000.

When the weight-average molecular weight of the acidic water-soluble polymer that is contained in the aqueous phase is within the specific range set forth above, even better viscousness can be imparted to the binder composition, and the peel strength of an electrode that is formed using a slurry composition containing the binder composition can be further improved.

Note that the weight-average molecular weight of an acidic water-soluble polymer referred to in the present disclosure can be measured by a method described in the EXAMPLES section of the present specification.

[6] In the binder composition for a non-aqueous secondary battery electrode according to any one of the foregoing [1] to [5], the average particle diameter Da of the particulate polymer is preferably not less than 100 nm and not more than 340 nm.

When the average particle diameter Da of the particulate polymer measured by dynamic light scattering is within the specific range set forth above, even better viscousness can be imparted to the binder composition, and the peel strength of an electrode that is formed using a slurry composition containing the binder composition can be further improved.

Moreover, the present disclosure aims to advantageously solve the problem set forth above and provides [7] a slurry composition for a non-aqueous secondary battery electrode comprising: an electrode active material; and the binder composition for a non-aqueous secondary battery electrode according to any one of the foregoing [1] to [6].

A slurry composition for a non-aqueous secondary battery electrode that contains an electrode active material and any one of the binder compositions for a non-aqueous secondary battery electrode set forth above in this manner is capable of forming an electrode having excellent peel strength.

Furthermore, the present disclosure aims to advantageously solve the problem set forth above and provides [8] an electrode for a non-aqueous secondary battery comprising an electrode mixed material layer formed using the slurry composition for a non-aqueous secondary battery electrode according to the foregoing [7].

An electrode for a non-aqueous secondary battery that includes an electrode mixed material layer formed using the slurry composition for a non-aqueous secondary battery electrode set forth above in this manner has excellent peel strength.

Also, the present disclosure aims to advantageously solve the problem set forth above and provides [9] a non-aqueous secondary battery comprising a positive electrode, a negative electrode, a separator, and an electrolyte solution, wherein at least one of the positive electrode and the negative electrode is the electrode for a non-aqueous secondary battery according to the foregoing [8].

A non-aqueous secondary battery that includes the electrode for a non-aqueous secondary battery set forth above can display excellent performance. For example, the non-aqueous secondary battery has excellent battery characteristics such as cycle characteristics and also has reduced internal resistance.

### (Advantageous Effect)

According to the present disclosure, it is possible to provide a binder composition for a non-aqueous secondary battery electrode that has good viscousness and is capable of forming an electrode for a non-aqueous secondary battery having excellent peel strength.

Moreover, according to the present disclosure, it is possible to provide a slurry composition for a non-aqueous secondary battery electrode that is capable of forming an electrode for a non-aqueous secondary battery having excellent peel strength.

Furthermore, according to the present disclosure, it is possible to provide an electrode for a non-aqueous secondary battery having excellent peel strength and a non-aqueous secondary battery including this electrode for a non-aqueous secondary battery.

### DETAILED DESCRIPTION

The following provides a detailed description of embodiments of the present disclosure.

A presently disclosed binder composition for a non-aqueous secondary battery electrode (hereinafter, also referred to simply as a "binder composition") can be used in production of a presently disclosed slurry composition for a non-aqueous secondary battery electrode (hereinafter, also referred to simply as a "slurry composition"). Moreover, a slurry composition for a non-aqueous secondary battery electrode that is produced using the presently disclosed binder composition for a non-aqueous secondary battery electrode can be used in production of an electrode of a non-aqueous secondary battery such as a lithium ion secondary battery. Furthermore, a feature of a presently disclosed non-aqueous secondary battery is that a presently disclosed electrode for a non-aqueous secondary battery (hereinafter, also referred to simply as an "electrode") formed using the presently disclosed slurry composition for a non-aqueous secondary battery electrode is used therein.

Note that the presently disclosed binder composition for a non-aqueous secondary battery electrode, slurry composition for a non-aqueous secondary battery electrode, and electrode for a non-aqueous secondary battery are preferably for a negative electrode, and the presently disclosed non-aqueous secondary battery is preferably a non-aqueous secondary battery in which the presently disclosed electrode for a non-aqueous secondary battery is used as a negative electrode.

### (Binder composition for non-aqueous secondary battery electrode)

The presently disclosed binder composition for a non-aqueous secondary battery electrode contains a particulate polymer that includes an aromatic vinyl monomer unit, an aliphatic conjugated diene monomer unit, and a carboxyl group-containing monomer unit in specific proportions. Moreover, a ratio (Da/Db) of an average particle diameter Da of the particulate polymer measured by dynamic light scattering and a volume-average particle diameter Db of the particulate polymer measured by laser diffraction/scattering is within a specific range. Furthermore, the volume-average particle diameter Db of the particulate polymer is within a specific range. The presently disclosed binder composition for a non-aqueous secondary battery electrode has good viscousness and can cause an electrode that is formed using a slurry composition containing the binder composition to display excellent peel strength as a result of containing the specific particulate polymer described above. Moreover, by using an electrode having excellent peel strength that is formed using a slurry composition containing the presently disclosed binder composition, it is possible to improve the performance of a secondary battery. For example, battery characteristics such as cycle characteristics can be improved and internal resistance of the secondary battery can be reduced.

Furthermore, by using the presently disclosed binder composition for a non-aqueous secondary battery electrode, it is possible to cause a formed electrode to display excellent peel strength even in a situation in which the electrode is produced through high-speed coating (application and drying) of a slurry composition that is produced using the binder composition.

Note that the presently disclosed binder composition for a non-aqueous secondary battery electrode normally further contains a dispersion medium such as water (aqueous phase).

### <Particulate polymer>

The particulate polymer is a component that functions as a binder. In an electrode mixed material layer that is formed using a slurry composition containing the binder composition, the particulate polymer holds components such as an electrode active material so that these components do not detach from the electrode mixed material layer.

The particulate polymer is water-insoluble particles that are formed of a specific polymer. Note that when particles of a polymer are said to be "water-insoluble" in the present disclosure, this means that when 0.5 g of the polymer is dissolved in 100 g of water at a temperature of 25°C, insoluble content is 90 mass% or more.

The particulate polymer includes an aromatic vinyl monomer unit, an aliphatic conjugated diene monomer unit, and a carboxyl group-containing monomer unit in specific proportions. Note that the particulate polymer may optionally further include monomer units other than the aromatic vinyl monomer unit, the aliphatic conjugated diene monomer unit, and the carboxyl group-containing monomer unit (hereinafter, also referred to as "other monomer units").

### [Aromatic vinyl monomer unit]

Examples of aromatic vinyl monomers that can form an aromatic vinyl monomer unit in the particulate polymer include aromatic monovinyl compounds such as styrene, styrene sulfonic acid and salts thereof, α-methylstyrene, p-t-butylstyrene, butoxystyrene, vinyltoluene, chlorostyrene, and vinylnaphthalene. Of these aromatic vinyl monomers, styrene is preferable. Although one of these aromatic vinyl monomers may be used individually or two or more of these aromatic vinyl monomers may be used in combination, it is preferable that one aromatic vinyl monomer is used individually.

The proportional content of aromatic vinyl monomer units in the particulate polymer when the amount of all repeating units (monomer units) in the particulate polymer is taken to be 100 mass% is required to be 5 mass% or more, and is preferably 10 mass% or more, and more preferably 20 mass% or more. Moreover, the proportional content of aromatic vinyl monomer units in the particulate polymer when the amount of all repeating units (monomer units) in the particulate polymer is taken to be 100 mass% is required to be 65 mass% or less, and is preferably 55 mass% or less, and more preferably 47 mass% or less. When the proportional content of aromatic vinyl monomer units in the particulate polymer is not less than any of the lower limits set forth above, the stability of a slurry composition that contains the binder composition can be improved. On the other hand, when the proportional content of aromatic vinyl monomer units in the particulate polymer is not more than any of the upper limits set forth above, the peel strength of an electrode that is formed using the binder composition can be sufficiently improved.

Note that the proportional content of aromatic vinyl monomer units in the particulate polymer when the amount of all repeating units (monomer units) in the particulate polymer is taken to be 100 mass% may be 21 mass% or more, may be 23 mass% or more, may be 24 mass% or more, may be 30 mass% or more, may be 40 mass% or more, may be 50 mass% or more, or may be 60 mass% or more.

### [Aliphatic conjugated diene monomer unit]

Examples of aliphatic conjugated diene monomers that can form an aliphatic conjugated diene monomer unit in the particulate polymer include conjugated diene compounds having a carbon number of 4 or more such as 1,3-butadiene, isoprene, 2,3-dimethyl-1,3-butadiene, and 1,3-pentadiene. One of these aliphatic conjugated diene monomers may be used individually, or two or more of these aliphatic conjugated diene monomers may be used in combination. Of these aliphatic conjugated diene monomers, 1,3-butadiene and isoprene are preferable from a viewpoint of improving moisture resistance of an electrode, and 1,3-butadiene is more preferable.

The proportional content of aliphatic conjugated diene monomer units in the particulate polymer when the amount of all repeating units (monomer units) in the particulate polymer is taken to be 100 mass% is required to be 30 mass% or more, and is preferably 40 mass% or more, and more preferably 50 mass% or more. Moreover, the proportional content of aliphatic conjugated diene monomer units in the particulate polymer when the amount of all repeating units (monomer units) in the particulate polymer is taken to be 100 mass% is required to be 90 mass% or less, and is preferably 85 mass% or less, more preferably 77 mass% or less, and even more preferably 73.5 mass% or less. When the proportional content of aliphatic conjugated diene monomer units in the particulate polymer is not less than any of the lower limits set forth above, the peel strength of an electrode that is formed using the binder composition can be sufficiently improved. On the other hand, when the proportional content of aliphatic conjugated diene monomer units in the particulate polymer is not more than any of the upper limits set forth above, the stability of a slurry composition that contains the binder composition can be improved.

Note that the proportional content of aliphatic conjugated diene monomer units in the particulate polymer when the amount of all repeating units (monomer units) in the particulate polymer is taken to be 100 mass% may be 65 mass% or less, may be 55 mass% or less, may be 45 mass% or less, or may be 35 mass% or less.

### [Carboxyl group-containing monomer unit]

A monomer that includes a double bond between carbons and a carboxyl group can be used as a carboxyl group-containing monomer that can form a carboxyl group-containing monomer unit in the particulate polymer. For example, the monomer may be a monocarboxylic acid, a derivative of a monocarboxylic acid, a dicarboxylic acid, an acid anhydride of a dicarboxylic acid, a derivative of a dicarboxylic acid or acid anhydride thereof, or the like.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as butyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, dimethylmaleic anhydride, and citraconic anhydride.

Moreover, an acid anhydride that produces a carboxyl group through hydrolysis can also be used as a carboxyl group-containing monomer.

Furthermore, an ethylenically unsaturated polybasic carboxylic acid such as butene tricarboxylic acid, a partial ester of an ethylenically unsaturated polybasic carboxylic acid such as monobutyl fumarate or mono-2-hydroxypropyl maleate, or the like can be used as a carboxyl group-containing monomer.

One of these carboxyl group-containing monomers may be used individually, or two or more of these carboxyl group-containing monomers may be used in combination.

Of these carboxyl group-containing monomers, acrylic acid, methacrylic acid, and itaconic acid are preferable from a viewpoint of improving the stability of a slurry composition that is produced using the binder composition and further improving the peel strength of a formed electrode, methacrylic acid and itaconic acid are more preferable, and methacrylic acid is even more preferable.

The proportional content of carboxyl group-containing monomer units in the particulate polymer when the amount of all repeating units (monomer units) in the particulate polymer is taken to be 100 mass% is required to be 2 mass% or more, and is preferably 2.5 mass% or more. Moreover, the proportional content of carboxyl group-containing monomer units in the particulate polymer when the amount of all repeating units (monomer units) in the particulate polymer is taken to be 100 mass% is required to be 9 mass% or less, and is preferably 5 mass% or less, more preferably 3.5 mass% or less, and even more preferably 3 mass% or less. When the proportional content of carboxyl group-containing monomer units in the particulate polymer is not less than any of the lower limits set forth above, the peel strength of an electrode that is formed using the binder composition can be sufficiently improved. On the other hand, when the proportional content of carboxyl group-containing monomer units in the particulate polymer is not more than any of the upper limits set forth above, the viscosity of the binder composition can be restricted from increasing excessively, and thus good viscousness of the binder composition can be maintained.

The proportional content of carboxyl group-containing monomer units in the particulate polymer when the amount of all repeating units (monomer units) in the particulate polymer is taken to be 100 mass% may be 3 mass% or more, may be 3.5 mass% or more, may be 3.7 mass% or more, or may be 4.0 mass% or more.

### [Other monomer units]

Examples of other monomer units that can be included in the particulate polymer include, but are not specifically limited to, a hydrophilic monomer unit that does not include a carboxyl group and a cross-linkable group-containing hydrophilic monomer unit.

### -Hydrophilic monomer unit that does not include carboxyl group-

The particulate polymer preferably further includes a hydrophilic monomer unit that does not include a carboxyl group as another monomer unit. When the particulate polymer further includes a hydrophilic monomer unit that does not include a carboxyl group, tack strength of the binder composition can be reduced.

Examples of hydrophilic monomers that do not include a carboxyl group and that can be used to form a hydrophilic monomer unit that does not include a carboxyl group in the particulate polymer include hydroxy group-containing monomers; nitrile group-containing monomers such as (meth)acrylonitrile; (meth)acrylamide monomers such as acrylamide and methacrylamide; (meth)acrylic acid alkyl ester monomers that include an alkyl group having a carbon number of not less than 1 and not more than 5 (preferably not less than 1 and not more than 3, and more preferably not less than 1 and not more than 2) such as methyl (meth)acrylate, ethyl (meth)acrylate, propyl (meth)acrylate, butyl (meth)acrylate, and pentyl (meth)acrylate; and polyalkylene oxide structure-containing monomers. One of these hydrophilic monomers that do not include a carboxyl group may be used individually, or two or more of these hydrophilic monomers that do not include a carboxyl group may be used in combination in a freely selected ratio.

Note that in the present disclosure, "(meth)acryl" indicates "acryl" and/or "methacryl", whereas "(meth)acrylonitrile" indicates "acrylonitrile" and/or "methacrylonitrile".

Examples of hydroxy group-containing monomers include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula CH₂=CR^{a}-COO-(C_{q}H_{2q}O)ₚ-H (where p represents an integer of 2 to 9, q represents an integer of 2 to 4, and R^{a} represents a hydrogen atom or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; (meth)allyl thioethers of alkylene glycols such as (meth)allyl-2-hydroxyethyl thioether and (meth)allyl-2-hydroxypropyl thioether; and hydroxy group-containing amides (excluding N-methylol(meth)acrylamide) such as hydroxyethylacrylamide and hydroxyethylmethacrylamide.

Note that in the present disclosure, "(meth)allyl" indicates "allyl" and/or "methallyl", whereas "(meth)acryloyl" indicates "acryloyl" and/or "methacryloyl".

One hydroxy group-containing monomer may be used individually, or two or more hydroxy group-containing monomers may be used in combination in a freely selected ratio.

A polyethylene oxide structure-containing monomer represented by formula (I): CH₂=CR¹-COO-(CH₂CH₂O)ₙ-R² (where R¹ represents a hydrogen atom or a methyl group, R² represents an alkyl group having a carbon number of not less than 1 and not more than 5, and n represents an integer of 5 or more) can, for example, be used as a polyalkylene oxide structure-containing monomer.

The carbon number of the alkyl group constituting R² in formula (I) is preferably 3 or less, more preferably 2 or less, and even more preferably 1.

Moreover, n in formula (I) is preferably 7 or more, and preferably 9 or more, and is preferably 25 or less, and more preferably 15 or less.

Examples include polyethylene oxide structure-containing monomers such as AM-90G, AM-130G, M-90G, and M-230G (product names) produced by Shin-Nakamura Chemical Co., Ltd. One of these polyethylene oxide structure-containing monomers may be used individually, or two or more of these polyethylene oxide structure-containing monomers may be used in combination in a freely selected ratio.

From a viewpoint of suppressing foaming of a slurry composition that contains the binder composition while also further reducing tack strength of the binder composition, it is preferable to use 2-hydroxyethyl (meth)acrylate, N-hydroxyethyl(meth)acrylamide, (meth)acrylonitrile, (meth)acrylamide, or methyl (meth)acrylate as a hydrophilic monomer that does not include a carboxyl group.

Note that the hydrophilic monomer that does not include a carboxyl group is considered to be a different monomer to a subsequently described cross-linkable group-containing hydrophilic monomer that can form a cross-linkable group-containing hydrophilic monomer unit.

The solubility in water of the hydrophilic monomer that does not include a carboxyl group is preferably 10,000 mg/L or more, more preferably 12,000 mg/L or more, and even more preferably 14,000 mg/L or more, and is preferably 2,000,000 mg/L or less, and more preferably 1,900,000 mg/L or less. When the solubility in water of the hydrophilic monomer that does not include a carboxyl group is not less than any of the lower limits set forth above, tack strength of the binder composition can be further reduced. On the other hand, when the solubility in water of the hydrophilic monomer that does not include a carboxyl group is not more than any of the upper limits set forth above, foaming of a slurry composition that contains the binder composition can be suppressed.

Note that the "solubility in water" referred to in the present disclosure means the solubility in water at 25°C.

The proportional content of hydrophilic monomer units that do not include a carboxyl group in the particulate polymer when the amount of all repeating units (monomer units) in the particulate polymer is taken to be 100 mass% is preferably 0.1 mass% or more, more preferably 0.5 mass% or more, and even more preferably 1 mass% or more, and is preferably less than 5 mass%, more preferably 4 mass% or less, and even more preferably 3 mass% or less. When the proportional content of hydrophilic monomer units that do not include a carboxyl group in the particulate polymer is not less than any of the lower limits set forth above, tack strength of the binder composition can be further reduced. On the other hand, when the proportional content of hydrophilic monomer units that do not include a carboxyl group in the particulate polymer is not more than or is less than any of the upper limits set forth above, the slurry stability of a slurry composition that contains the binder composition can be improved.

Note that the proportional content of hydrophilic monomer units that do not include a carboxyl group in the particulate polymer when the amount of all repeating units (monomer units) in the particulate polymer is taken to be 100 mass% may be 2.5 mass% or less, may be 2 mass% or less, may be 1.5 mass% or less, or may be 1 mass% or less, and may be 0 mass% or more.

### -Cross-linkable group-containing hydrophilic monomer unit-

The particulate polymer preferably further includes a cross-linkable group-containing hydrophilic monomer unit as another monomer unit. When the particulate polymer further includes a cross-linkable group-containing hydrophilic monomer unit, tack strength of the binder composition can be reduced.

Examples of cross-linkable group-containing hydrophilic monomers that can preferably be used to form a cross-linkable group-containing hydrophilic monomer unit in the particulate polymer include monomers that include an epoxy group as a cross-linkable group such as glycidyl (meth)acrylate; monomers that include a polyethylene oxide structure and include two or more olefinic double bonds per molecule such as polyethylene glycol di(meth)acrylate represented by a formula (II): CH₂=CR³-COO-(CH₂CH₂O)ₘ-OOC-CR⁴=CH₂ (where R³ and R⁴ represent, independently of each other, a hydrogen atom or a methyl group, and m represents an integer of 2 or more); and monomers that include an N-methylolamide group as a cross-linkable group such as N-methylol(meth)acrylamide (solubility in water: 1,880 mg/L).

Note that in the present disclosure, "(meth)acrylate" indicates "acrylate" and/or "methacrylate".

The solubility in water of the cross-linkable group-containing hydrophilic monomer is preferably 1,000 mg/L or more, more preferably 1,200 mg/L or more, and even more preferably 1,500 mg/L or more, and is preferably 2,000,000 mg/L or less, and more preferably 1,900,000 mg/L or less. When the solubility in water of the cross-linkable group-containing hydrophilic monomer is not less than any of the lower limits set forth above, tack strength of the binder composition can be further reduced. On the other hand, when the solubility in water of the cross-linkable group-containing hydrophilic monomer is not more than any of the upper limits set forth above, foaming of a slurry composition that contains the binder composition can be suppressed.

Note that the cross-linkable group-containing hydrophilic monomer is considered to be a monomer that does not include a carboxyl group.

The proportional content of cross-linkable group-containing hydrophilic monomer units in the particulate polymer when the amount of all repeating units (monomer units) in the particulate polymer is taken to be 100 mass% can be 0 mass% or more, is preferably 0.1 mass% or more, more preferably 0.2 mass% or more, and even more preferably 0.3 mass% or more, and is preferably less than 5 mass%, more preferably 3 mass% or less, and even more preferably 1 mass% or less. When the proportional content of cross-linkable group-containing hydrophilic monomer units in the particulate polymer is not less than any of the lower limits set forth above, tack strength of the binder composition can be further reduced. On the other hand, when the proportional content of cross-linkable group-containing hydrophilic monomer units in the particulate polymer is less than or is not more than any of the upper limits set forth above, the peel strength of an electrode that is formed using a slurry composition containing the binder composition can be improved.

### [Structure of particulate polymer]

The particulate polymer may be a particulate polymer having a uniform monomer unit composition (types and proportional contents of monomer units) or may be a particulate polymer having a non-uniform monomer unit composition. The particulate polymer having a non-uniform monomer unit composition may be a particulate polymer having a core-shell structure that includes a core portion and a shell portion at least partially covering an outer surface of the core portion and in which the core portion and the shell portion have different monomer unit compositions, a particulate polymer in which only a nucleus part has a different monomer unit composition, or the like, for example.

From a viewpoint of further improving the peel strength of a formed electrode, it is preferable that the particulate polymer has a core-shell structure including a core portion that is formed of a copolymer including an aromatic vinyl monomer unit and an aliphatic conjugated diene monomer unit and a shell portion that is formed of a polymer including a carboxyl group-containing monomer unit.

Although the core-shell structure of the particulate polymer may further include constituent elements other than the core portion and the shell portion, it is preferable that the core-shell structure is composed of only the core portion and the shell portion.

Moreover, from a viewpoint of further improving the peel strength of a formed electrode, it is more preferable that the core portion of the core-shell structure of the particulate polymer is formed of a random copolymer including an aromatic vinyl monomer unit and an aliphatic conjugated diene monomer unit.

Note that the copolymer forming the core portion may include monomer units other than an aromatic vinyl monomer unit and an aliphatic conjugated diene monomer unit or may just include an aromatic vinyl monomer unit and an aliphatic conjugated diene monomer unit.

Furthermore, from a viewpoint of reducing tack strength of the binder composition, it is preferable that the copolymer forming the core portion further includes a hydrophilic monomer unit that does not include a carboxyl group.

The shell portion of the core-shell structure of the particulate polymer may be formed of a copolymer that includes a monomer unit other than a carboxyl group-containing monomer unit or may be formed of a homopolymer that just includes a carboxyl group-containing monomer unit, for example.

From a viewpoint of reducing tack strength of the binder composition, it is preferable that the polymer forming the shell portion further includes a cross-linkable group-containing hydrophilic monomer unit.

The proportion constituted by the core portion in the particulate polymer when the mass of the entire particulate polymer is taken to be 100 mass% is preferably 91 mass% or more, more preferably 95 mass% or more, and even more preferably 96.5 mass% or more, and is preferably 98 mass% or less, and more preferably 97.5 mass% or less. When the proportion constituted by the core portion in the particulate polymer is not less than any of the lower limits set forth above, the viscosity of the binder composition can be further restricted from increasing excessively, and thus even better viscousness of the binder composition can be maintained. On the other hand, when the proportion constituted by the core portion in the particulate polymer is not more than any of the upper limits set forth above, the peel strength of an electrode that is formed using the binder composition can be further improved.

The proportion constituted by the shell portion in the particulate polymer when the mass of the entire particulate polymer is taken to be 100 mass% is preferably 2 mass% or more, and more preferably 2.5 mass% or more, and is preferably 9 mass% or less, more preferably 5 mass% or less, and even more preferably 3.5 mass% or less. When the proportion constituted by the shell portion in the particulate polymer is not less than any of the lower limits set forth above, the peel strength of an electrode that is formed using the binder composition can be further improved. On the other hand, when the proportion constituted by the shell portion in the particulate polymer is not more than any of the upper limits set forth above, the viscosity of the binder composition can be further restricted from increasing excessively, and thus even better viscousness of the binder composition can be maintained.

Alternatively, the particulate polymer may be a particulate polymer that has a uniform monomer unit composition (types and proportional contents of monomer units) without having the core-shell structure described above. For example, the particulate polymer may be a random copolymer that includes an aromatic vinyl monomer unit, an aliphatic conjugated diene monomer unit, a carboxyl group-containing monomer unit, and a hydrophilic monomer unit that does not include a carboxyl group in the specific proportions that were described above.

### [Average particle diameter Da measured by dynamic light scattering]

The average particle diameter Da of the particulate polymer measured by dynamic light scattering is preferably 100 nm or more, more preferably 130 nm or more, even more preferably 150 nm or more, further preferably 160 nm or more, even further preferably 180 nm or more, even more further preferably 200 nm or more, and particularly preferably 220 nm or more, and is preferably 340 nm or less, more preferably 300 nm or less, even more preferably 260 nm or less, and further preferably 240 nm or less.

Note that the average particle diameter Da of the particulate polymer measured by dynamic light scattering may be 220 nm or less, may be 200 nm or less, may be 180 nm or less, or may be 160 nm or less.

In a case in which the particulate polymer has the previously described core-shell structure, for example, the value of the average particle diameter Da of the particulate polymer measured by dynamic light scattering is presumed to be dependent on the particle diameter of the entire core-shell structure of the particulate polymer.

Accordingly, the value of the average particle diameter Da of the particulate polymer measured by dynamic light scattering can be adjusted through the types and amounts of monomers used in formation of the particulate polymer, the polymerization method and conditions, and so forth, for example.

Note that the average particle diameter Da of a particulate polymer referred to in the present disclosure can be measured by the following method. In this method, a particle size distribution analyzer (produced by Otsuka Electronics Co., Ltd.; model: nanoSAQLA) having dynamic light scattering as a measurement principle is used to measure a particle size distribution of a binder composition (water dispersion of a particulate polymer) obtained as described above, and then the particle diameter (D50) at which cumulative frequency of light scattering intensity calculated from a small diameter end in the measured particle size distribution reaches 50% is taken to be the average particle diameter Da. The measurement conditions in the dynamic light scattering are as follows.
Dispersion medium: Deionized water
Measurement temperature: 25 ± 1°C
Measurement concentration (solid content concentration): 0.5 mass% Scattering angle: 168.8°
Light source laser wavelength: 660 nm

### [Volume-average particle diameter Db measured by laser diffraction/scattering]

The volume-average particle diameter Db of the particulate polymer measured by laser diffraction/scattering is required to be 100 nm or more, and is preferably 110 nm or more, more preferably 120 nm or more, and even more preferably 130 nm or more. Moreover, the volume-average particle diameter Db of the particulate polymer measured by laser diffraction/scattering is required to be 170 nm or less, and is preferably 160 nm or less, and more preferably 150 nm or less. When the volume-average particle diameter Db of the particulate polymer measured by laser diffraction/scattering is within any of the specific ranges set forth above, the peel strength of an electrode that is formed using the binder composition can be sufficiently improved. When the volume-average particle diameter Db of the particulate polymer measured by laser diffraction/scattering is not less than any of the lower limits set forth above, the injectability of electrolyte solution into a secondary battery that includes an electrode formed using the binder composition can be improved, and the internal resistance of this secondary battery can be reduced.

Moreover, the volume-average particle diameter Db of the particulate polymer measured by laser diffraction/scattering may be 140 nm or more, or may be 140 nm or less.

In a case in which the particulate polymer has the previously described core-shell structure, for example, the value of the volume-average particle diameter Db of the particulate polymer measured by laser diffraction/scattering is presumed to be influenced to a certain extent by the shell portion but be largely dependent on the particle diameter of the core portion.

Accordingly, the value of the volume-average particle diameter Db of the particulate polymer measured by laser diffraction/scattering can be adjusted through the types and amounts of monomers used in formation of the core portion of the particulate polymer, the polymerization conditions, and so forth, for example.

### [Ratio of Da/Db]

A ratio (Da/Db) of the average particle diameter Da of the particulate polymer measured by dynamic light scattering and the volume-average particle diameter Db of the particulate polymer measured by laser diffraction/scattering is required to be 1.05 or more, and is preferably 1.1 or more, more preferably 1.3 or more, and more preferably 1.38 or more. Moreover, the ratio Da/Db is required to be 2.0 or less, and is preferably 1.9 or less, more preferably 1.8 or less, and even more preferably 1.69 or less.

When the ratio Da/Db of Da and Db described above is not less than any of the lower limits set forth above, the peel strength of an electrode that is formed using the binder composition can be sufficiently improved. Although it is not clear why the peel strength of an electrode that is formed using the binder composition can be sufficiently improved when the ratio Da/Db of Da and Db described above is not less than any of the lower limits set forth above, the reason for this is presumed to be as follows. Specifically, in a situation in which a slurry composition that contains a binder composition is applied onto a current collector and is dried to form an electrode mixed material layer in production of an electrode, it is thought that by using a binder composition that contains a particulate polymer having a ratio of Da/Db that is not less than any of the lower limits set forth above, it is possible to inhibit movement (migration) of the particulate polymer to a surface side of the electrode mixed material layer (i.e., an opposite side to a current collector side). This results in good dispersion of the particulate polymer in the electrode mixed material layer and thereby enables sufficient improvement of peel strength of the electrode.

On the other hand, when the ratio Da/Db of Da and Db described above is not more than any of the upper limits set forth above, the viscosity of the binder composition can be restricted from increasing excessively, and thus good viscousness of the binder composition can be maintained.

The ratio (Da/Db) of the average particle diameter Da of the particulate polymer measured by dynamic light scattering and the volume-average particle diameter Db of the particulate polymer measured by laser diffraction/scattering may be 1.6 or less, may be 1.4 or less, may be 1.2 or less, may be 1.14 or less, or may be 1.14 or more.

### [Glass-transition temperature]

The glass-transition temperature of the particulate polymer is preferably -60°C or higher, more preferably -30°C or higher, and even more preferably -25°C or higher, and is preferably 500°C or lower, more preferably 400°C or lower, and even more preferably 300°C or lower. When the glass-transition temperature of the particulate polymer is not lower than any of the lower limits set forth above, tack strength of the binder composition can be reduced. On the other hand, when the glass-transition temperature of the particulate polymer is not higher than any of the upper limits set forth above, sufficiently high peel strength of a formed electrode can be ensured.

The glass-transition temperature of the particulate polymer may be -20°C or higher, or may be -15°C or higher. Moreover, the glass-transition temperature of the particulate polymer may be 0°C or lower, or may be -15°C or lower.

Note that the glass-transition temperature of a particulate polymer can be measured by a method described in the EXAMPLES section of the present specification.

### <Aqueous phase>

The presently disclosed binder composition for a non-aqueous secondary battery electrode normally contains water as a dispersion medium of the particulate polymer.

In a case in which the binder composition contains an aqueous phase, the pH of the binder composition (pH of the aqueous phase) is preferably 6 or higher, and more preferably 7 or higher, and is preferably 10 or lower, more preferably 9 or lower, and even more preferably 8 or lower. When the pH of the binder composition is not lower than any of the lower limits set forth above, the peel strength of an electrode that is formed using the binder composition can be further improved. On the other hand, when the pH of the binder composition is not higher than any of the upper limits set forth above, the viscosity of the binder composition can be restricted from increasing excessively, and thus good viscousness of the binder composition can be maintained.

Note that the pH may be adjusted by adding an alkali species to the aqueous phase. The alkali species may be lithium hydroxide, sodium hydroxide, potassium hydroxide, or ammonia water, for example, and is preferably ammonia water because there is a low tendency for aggregates to form due to addition shock during alkali neutralization.

The aqueous phase of the binder composition can contain an acidic water-soluble polymer. The acidic water-soluble polymer that can be contained in the aqueous phase may, for example, be produced through polymerization, as a side product, from a monomer that serves as a raw material for the particulate polymer in production of the particulate polymer through polymerization. Such an acidic water-soluble polymer may, for example, be a polymer that includes a carboxyl group-containing monomer unit and can optionally further include an aromatic vinyl monomer unit and an aliphatic conjugated diene monomer unit. Monomers that were previously described in the "Particulate polymer" section can be used as monomers that can form various monomer units such as a carboxyl group-containing monomer unit, an aromatic vinyl monomer unit, and an aliphatic conjugated diene monomer unit that can be included in the acidic water-soluble polymer.

The weight-average molecular weight of such an acidic water-soluble polymer is preferably 500 or more, more preferably 700 or more, and even more preferably 1,000 or more, and is preferably 20,000 or less, more preferably 15,000 or less, even more preferably 8,000 or less, further preferably 3,500 or less, and even further preferably 2,000 or less. When the weight-average molecular weight of the acidic water-soluble polymer is not less than any of the lower limits set forth above, the peel strength of an electrode that is formed using the binder composition can be further improved. On the other hand, when the weight-average molecular weight of the acidic water-soluble polymer is not more than any of the upper limits set forth above, the viscosity of the binder composition can be restricted from increasing excessively, and thus good viscousness of the binder composition can be maintained.

Note that the acidic water-soluble polymer may be in the form of a salt (salt of an acidic water-soluble polymer). In other words, the term "acidic water-soluble polymer" as used in the present disclosure is also inclusive of a salt of that acidic water-soluble polymer. Also note that when a polymer is said to be "water-soluble" in the present disclosure, this means that when 0.5 g of the polymer is dissolved in 100 g of water at a temperature of 25°C, insoluble content is less than 1.0 mass%.

The aqueous phase of the binder composition may contain an additive such as an antioxidant or a preservative.

The antioxidant may be a hindered phenolic antioxidant (for example, 4-[[4,6-bis(octylthio)-1,3,5-triazin-2-yl]amino]-2,6-di-tert-butylphenol, 2,6-di-tert-butyl-p-cresol, stearyl 3-(3,5-di-tert-butyl-4-hydroxyphenyl)propionate, pentaerythritol tetrakis[3-(3,5-di-tert-butyl-4-hydroxyphenyl)propionate], or 2,4,6-tris(3',5'-di-tert-butyl-4'-hydroxybenzyl)mesitylene), an oligomeric phenolic antioxidant (for example, WINGSTAY L), a phosphite antioxidant (for example, 3,9-bis(octadecyloxy)-2,4,8,10-tetraoxa-3,9-diphosphaspiro[5.5]undecane, 3,9-bis(2,6-di-tert-butyl-4-methylphenoxy)-2,4,8,10-tetraoxa-3,9-diphosphaspiro[5.5]undecane, 2,2-methylenebis(4,6-dit-butylphenyl) 2-ethylhexyl phosphite, or tris(2,4-di-tert-butylphenyl) phosphite), a sulfuric antioxidant (for example, didodecyl 3,3'-thiodipropionate), or the like.

The additive amount of the antioxidant is preferably 0.1 parts by mass or more, and more preferably 1 part by mass or more relative to 100 parts by mass of the particulate polymer, and is preferably 10 parts by mass or less, and more preferably 5 parts by mass or less relative to 100 parts by mass of the particulate polymer.

The preservative may be a known preservative such as an isothiazoline compound or 2-bromo-2-nitro-1,3-propanediol, for example. The isothiazoline compound may be any of those described in JP2013-211246A, JP2005-097474A, or JP2013-206624A, for example, without any specific limitations. One preservative may be used individually, or two or more preservatives may be used in combination. The preservative is preferably 1,2-benzisothiazolin-3-one, 2-methyl-4-isothiazolin-3-one, 5-chloro-2-methyl-4-isothiazolin-3-one, or 2-bromo-2-nitro-1,3-propanediol, and more preferably 1,2-benzisothiazolin-3-one.

The amount of the preservative that is contained in the binder composition is preferably 0.01 parts by mass or more relative to 100 parts by mass of the particulate polymer, and is preferably 0.5 parts by mass or less, more preferably 0.4 parts by mass or less, and even more preferably 0.3 parts by mass or less relative to 100 parts by mass of the particulate polymer. The formation of aggregates in the binder composition after long-term storage can be even further inhibited when the content of the preservative is 0.01 parts by mass or more per 100 parts by mass of the particulate polymer, whereas sufficiently high peel strength of an electrode can be ensured when the content of the preservative is 0.5 parts by mass or less per 100 parts by mass of the particulate polymer.

### <Production method of binder composition>

The presently disclosed binder composition for a non-aqueous secondary battery electrode can be produced through polymerization of monomers (aromatic vinyl monomer, aliphatic conjugated diene monomer, acid monomer, and other optional monomers) serving as a basis for structural units included in the particulate polymer in an emulsion. This production method may be a batch emulsion polymerization method, an emulsion (Em) prop method, or a seeded polymerization method, for example, and is preferably a batch emulsion polymerization method.

The batch emulsion polymerization method may be performed by the following procedure, for example. Monomers (aromatic vinyl monomer, aliphatic conjugated diene monomer, carboxyl group-containing monomer, and other optional monomers) serving as a basis for monomer units included in the particulate polymer are mixed with water, an emulsifier, and a polymerization initiator. The mixture (emulsion) is then heated to perform a polymerization reaction. At the point at which a specific polymerization conversion rate is reached, cooling is performed to quench the reaction to yield a mixture containing a particulate polymer. Unreacted monomer is removed from the mixture. The pH of this mixture is adjusted to within any of previously described preferable pH ranges for the aqueous phase, and the previously described additives (for example, an antioxidant) are optionally added to obtain a water dispersion as a binder composition for a non-aqueous secondary battery electrode. It is preferable that all of the aromatic vinyl monomer and the conjugated diene monomer are initially added. All of the carboxyl group-containing monomer and other optionally added monomers may be initially added, or a portion thereof may be added in a stepwise manner. Moreover, from a viewpoint of forming a particulate polymer having the previously described core-shell structure, all of the aromatic vinyl monomer and the conjugated diene monomer may be initially added and a polymerization reaction may be performed, and then all of the carboxyl group-containing monomer and other optionally added monomers may be added and a polymerization reaction may be further performed. Heating during the polymerization reaction may be performed to 40°C or higher, 45°C or higher, 50°C or higher, 55°C or higher, or 60°C or higher, for example, and may be performed to 90°C or lower, 85°C or lower, 80°C or lower, 75°C or lower, or 70°C or lower, for example. Removal of unreacted monomer from the mixture may be performed through thermal-vacuum distillation or through blowing in of steam, for example.

The Em prop method may be performed by the following procedure, for example. Monomers for core portion formation (one or more among an aromatic vinyl monomer, an aliphatic conjugated diene monomer, a carboxyl group-containing monomer, and other optional monomers) are mixed with water, an emulsifier, a chain transfer agent, and a polymerization initiator. The mixture (emulsion) is heated and a polymerization reaction is performed until a specific polymerization conversion rate is reached to yield a mixture containing a seed particle polymer as a core portion. Next, monomers for shell portion formation (one or more among an aromatic vinyl monomer, an aliphatic conjugated diene monomer, a carboxyl group-containing monomer, and other optional monomers) and optionally an emulsifier and water are continuously added to the mixture, and polymerization is continued. At the point at which a specific polymerization conversion rate is reached, cooling is performed to quench the reaction to yield a mixture containing a particulate polymer. Unreacted monomer is removed from the mixture. The pH of this mixture is adjusted to within any of previously described preferable pH ranges for the aqueous phase, and the previously described additives (for example, an antioxidant) are optionally added to obtain a water dispersion as a binder composition for a non-aqueous secondary battery electrode containing a particulate polymer having a core-shell structure.

In the seeded polymerization method, monomers for particulate polymer formation (aromatic vinyl monomer, aliphatic conjugated diene monomer, carboxyl group-containing monomer, and other optional monomers), water, an emulsifier, a chain transfer agent, and a polymerization initiator are mixed with a seed particle polymer formed of a polymer that includes one or more among an aromatic vinyl monomer unit, an aliphatic conjugated diene monomer unit, a carboxyl group-containing monomer unit, and other optional monomer units, for example, and then a polymerization reaction, etc. are performed in the same manner as described above to obtain a water dispersion as a binder composition for a non-aqueous secondary battery electrode.

The emulsifier used in production of the binder composition may be an alkyl diphenyl ether disulfonic acid, dodecylbenzenesulfonic acid, lauryl sulfuric acid, or a salt (for example, a potassium salt or a sodium salt) of any thereof, for example.

The polymerization initiator used in production of the binder composition may be potassium persulfate, n-butyllithium, or ammonium persulfate, for example.

The chain transfer agent used in production of the binder composition may be α-methylstyrene dimer, tert-dodecyl mercaptan, or 3-mercapto-1,2-propanediol, for example.

### <Viscosity of binder composition>

The presently disclosed binder composition set forth above has good viscousness.

A state in which the binder composition has "good viscousness" means, more specifically, that the viscosity of the binder composition, when set to a solid content concentration of 30 mass%, is 3,000 mPa·s or less, and preferably 1,500 mPa·s or less, and is 10 mPa·s or more. When the viscosity of the binder composition is within any of the specific ranges set forth above, binder production efficiency can be improved, and thus the binder composition can be said to have good viscousness.

Note that the viscosity of a binder composition referred to in the present disclosure can be measured by a method described in the EXAMPLES section of the present specification.

### (Slurry composition for non-aqueous secondary battery electrode)

The presently disclosed slurry composition is a composition that is used for forming an electrode mixed material layer of an electrode and contains the binder composition set forth above and an electrode active material. In other words, the presently disclosed slurry composition contains the previously described particulate polymer and an electrode active material, normally further contains a dispersion medium such as water (aqueous phase), and optionally further contains components other than those described above (hereinafter, referred to as "other components"). The presently disclosed slurry composition has good viscosity as a slurry composition and is capable of forming an electrode having excellent peel strength as a result of containing the binder composition set forth above. Moreover, by using an electrode having excellent peel strength that is formed using the presently disclosed slurry composition, it is possible to cause a secondary battery to display excellent performance. For example, battery characteristics such as cycle characteristics can be improved and internal resistance of the secondary battery can be reduced.

### <Binder composition>

The presently disclosed binder composition set forth above that contains the particulate polymer and normally further contains a dispersion medium such as water (aqueous phase) is used as the binder composition.

Note that no specific limitations are placed on the amount of the binder composition that is compounded in the slurry composition. For example, the amount of the binder composition can be set as an amount such that the amount of the particulate polymer is not less than 0.5 parts by mass and not more than 15 parts by mass in terms of solid content per 100 parts by mass of the electrode active material.

### <Electrode active material>

Any known electrode active material that is used in a secondary battery can be used without any specific limitations as the electrode active material. Specifically, examples of electrode active materials that can be used in an electrode mixed material layer of a lithium ion secondary battery, which is one example of a secondary battery, include the following electrode active materials, but are not specifically limited thereto.

### [Positive electrode active material]

Examples of positive electrode active materials that can be compounded in a positive electrode mixed material layer of a positive electrode in a lithium ion secondary battery include compounds that include a transition metal such as transition metal oxides, transition metal sulfides, and complex metal oxides of lithium and transition metals, for example. Examples of the transition metal include Ti, V, Cr, Mn, Fe, Co, Ni, Cu, and Mo.

Specific examples of positive electrode active materials include, but are not specifically limited to, lithium-containing cobalt oxide (LiCoO₂), lithium manganate (LiMn₂O₄), lithium-containing nickel oxide (LiNiO₂), a lithium-containing complex oxide of Co-Ni-Mn, a lithium-containing complex oxide of Ni-Mn-Al, a lithium-containing complex oxide of Ni-Co-Al, olivine-type lithium iron phosphate (LiFePO₄), olivine-type lithium manganese phosphate (LiMnPO₄), lithium-rich spinel compounds represented by Li₁₊ₓMn₂₋ₓO₄ (0 < x < 2), Li[Ni_{0.17}Li_{0.2}Co_{0.07}Mn_{0.56}]O₂, and LiNi_{0.5}Mn_{1.5}O₄.

One of the above-described positive electrode active materials may be used individually, or two or more of the above-described positive electrode active materials may be used in combination.

### [Negative electrode active material]

Examples of negative electrode active materials that can be compounded in a negative electrode mixed material layer of a negative electrode in a lithium ion secondary battery include carbon-based negative electrode active materials, metal-based negative electrode active materials, and negative electrode active materials that are combinations thereof.

The term "carbon-based negative electrode active material" refers to an active material that has carbon as a main framework allowing insertion (also referred to as "doping") of lithium. Specific examples of carbon-based negative electrode active materials include carbonaceous materials such as coke, mesocarbon microbeads (MCMB), mesophase pitch-based carbon fiber, pyrolytic vapor-grown carbon fiber, pyrolyzed phenolic resin, polyacrylonitrile-based carbon fiber, quasi-isotropic carbon, pyrolyzed furfuryl alcohol resin (PFA), and hard carbon, and graphitic materials such as natural graphite and artificial graphite.

The term "metal-based negative electrode active material" refers to an active material that contains metal, the structure of which usually contains an element that allows insertion of lithium, and that has a theoretical electric capacity per unit mass of 500 mAh/g or more when lithium is inserted. Examples of metal-based active materials include lithium metal, simple substances of metals that can form a lithium alloy (for example, Ag, Al, Ba, Bi, Cu, Ga, Ge, In, Ni, P, Pb, Sb, Si, Sn, Sr, Zn, and Ti), and oxides, sulfides, nitrides, silicides, carbides, and phosphides thereof. Moreover, an oxide such as lithium titanate can be used.

Of these metal-based negative electrode active materials, active materials containing silicon (silicon-based negative electrode active materials) are preferred. One reason for this is that the capacity of a lithium ion secondary battery can be increased through use of a silicon-based negative electrode active material.

Examples of silicon-based negative electrode active materials include silicon (Si), an alloy of silicon with cobalt, nickel, iron, or the like, SiOₓ, a mixture of a Si-containing material and a carbon material, and a composite of a Si-containing material and conductive carbon obtained by coating or combining the Si-containing material with the conductive carbon.

SiOₓ is a compound including Si and at least one of SiO and SiO₂, where x is normally not less than 0.01 and less than 2. SiOₓ can, for example, be formed by utilizing a disproportionation reaction of silicon monoxide (SiO). Specifically, SiOₓ can be prepared by heat-treating SiO, optionally in the presence of a polymer such as polyvinyl alcohol, to produce silicon and silicon dioxide. Note that the heat treatment can be performed in an inert gas atmosphere after pulverization and mixing of the SiO and the optional polymer.

The mixture of a Si-containing material and a carbon material may be a mixture obtained by pulverizing and mixing a Si-containing material such as silicon or SiOₓ with a carbon material such as a carbonaceous material or a graphitic material, optionally in the presence of a polymer such as polyvinyl alcohol. Any material that can be used as a carbon-based negative electrode active material can be used as the carbonaceous material or the graphitic material.

The composite of a Si-containing material and conductive carbon may be a compound obtained by, for example, heat-treating a pulverized mixture of SiO, a polymer such as polyvinyl alcohol, and optionally a carbon material in an inert gas atmosphere, for example. In a situation in which the temperature during heat treatment of the pulverized mixture is high, a composite (Si-SiOₓ-C composite) is formed that has SiOₓ produced through a disproportionation reaction of SiO dispersed in a matrix of conductive carbon formed of the carbonized polymer or the carbon material compounded as an optional component. Moreover, in a situation in which the temperature during heat treatment of the pulverized mixture is comparatively low, a composite (SiO-C) is formed in which some of the Si in SiO is replaced with conductive carbon.

One of the above-described negative electrode active materials may be used individually, or two or more of the above-described negative electrode active materials may be used in combination.

### <Other components>

Examples of other components that can be compounded in the slurry composition include, but are not specifically limited to, dispersants, viscosity modifiers (thickeners), phosphite antioxidants, metal scavengers, and conductive materials. One other component may be used individually, or two or more other components may be used in combination in a freely selected ratio.

### <Production of slurry composition>

No specific limitations are placed on the method by which the slurry composition is produced.

For example, the slurry composition can be produced by mixing the binder composition, the electrode active material, and other components that are used as necessary in the presence of the aqueous phase (aqueous medium) that is normally contained in the binder composition.

The mixing method is not specifically limited and can be mixing using a typically used stirrer or disperser.

### (Electrode for non-aqueous secondary battery)

The presently disclosed electrode for a non-aqueous secondary battery includes an electrode mixed material layer formed using the slurry composition for a non-aqueous secondary battery electrode set forth above. Accordingly, the electrode mixed material layer is formed of a dried product of the slurry composition set forth above, normally contains an electrode active material and a component derived from a particulate polymer, and optionally further contains other components. Note that components contained in the electrode mixed material layer are components that were contained in the slurry composition for a non-aqueous secondary battery electrode set forth above and that the preferred ratio of these components is the same as the preferred ratio of the components in the slurry composition. Also note that although the particulate polymer is present in a particulate form in the slurry composition, the particulate polymer may have a particulate form or may have any other form in the electrode mixed material layer that is formed using the slurry composition.

The presently disclosed electrode for a non-aqueous secondary battery has excellent peel strength as a result of the electrode mixed material layer being formed using the slurry composition for a non-aqueous secondary battery electrode set forth above. Consequently, a non-aqueous secondary battery that includes the presently disclosed electrode for a non-aqueous secondary battery can display excellent performance. For example, the non-aqueous secondary battery has excellent battery characteristics such as cycle characteristics and also has reduced internal resistance.

### <Production of electrode for non-aqueous secondary battery>

The electrode mixed material layer of the presently disclosed electrode for a non-aqueous secondary battery can be formed using any of the following methods, for example.
(1) A method in which the presently disclosed slurry composition is applied onto the surface of a current collector and is then dried
(2) A method in which a current collector is immersed in the presently disclosed slurry composition and is then dried
(3) A method in which the presently disclosed slurry composition is applied onto a releasable substrate and is dried to produce an electrode mixed material layer that is then transferred onto the surface of a current collector

Of these methods, method (1) is particularly preferable since it allows simple control of the thickness of the electrode mixed material layer. In more detail, method (1) includes a step of applying the slurry composition onto the current collector (application step) and a step of drying the slurry composition that has been applied onto the current collector to form an electrode mixed material layer on the current collector (drying step).

### [Application step]

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

Note that by using the presently disclosed slurry composition, it is possible to cause a formed electrode to display excellent peel strength even in a case in which the electrode is produced through high-speed application of the slurry composition onto the current collector.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. One of these materials may be used individually, or two or more of these materials may be used in combination in a freely selected ratio.

### [Drying step]

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector in this manner, an electrode mixed material layer can be formed on the current collector to thereby obtain an electrode for a non-aqueous secondary battery that includes the current collector and the electrode mixed material layer. Note that by using the presently disclosed slurry composition, it is possible to cause a formed electrode to display excellent peel strength even in a case in which the electrode is produced through high-speed drying of the slurry composition that has been applied onto the current collector.

After the drying step, the electrode mixed material layer may be further subjected to a pressing process, such as mold pressing or roll pressing. This pressing process can improve close adherence between the electrode mixed material layer and the current collector and enables densification of the obtained electrode mixed material layer. Furthermore, in a case in which the electrode mixed material layer contains a curable polymer, the polymer is preferably cured after the electrode mixed material layer has been formed.

### (Non-aqueous secondary battery)

The presently disclosed non-aqueous secondary battery includes a positive electrode, a negative electrode, an electrolyte solution, and a separator, wherein the electrode for a non-aqueous secondary battery set forth above is used as at least one of the positive electrode and the negative electrode. As a result of the presently disclosed non-aqueous secondary battery being produced by using the electrode for a non-aqueous secondary battery set forth above as at least one of the positive electrode and the negative electrode, the presently disclosed non-aqueous secondary battery can display excellent performance. For example, the presently disclosed non-aqueous secondary battery has excellent battery characteristics such as cycle characteristics and also has reduced internal resistance.

Although the following describes, as one example, a case in which the secondary battery is a lithium ion secondary battery, the presently disclosed secondary battery is not limited to the following example.

### <Electrodes>

Any known electrode that is used in production of a secondary battery can be used without any specific limitations as an electrode other than the presently disclosed electrode for a non-aqueous secondary battery set forth above that can be used in the presently disclosed non-aqueous secondary battery. Specifically, an electrode obtained by forming an electrode mixed material layer on a current collector by a known production method can be used as an electrode other than the presently disclosed electrode for a non-aqueous secondary battery set forth above.

### <Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that may suitably be used include carbonates such as dimethyl carbonate (DMC), ethylene carbonate, (EC), diethyl carbonate, (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution can be adjusted as appropriate. Furthermore, known additives may be added to the electrolyte solution.

### <Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

The presently disclosed secondary battery can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. Note that in the presently disclosed non-aqueous secondary battery, the electrode for a non-aqueous secondary battery set forth above is used as at least one of the positive electrode and the negative electrode, and is preferably used as the negative electrode. The presently disclosed non-aqueous secondary battery may be provided with an overcurrent preventing device such as a fuse or a PTC device; an expanded metal; a lead plate; or the like, as necessary, in order to prevent pressure increase inside the secondary battery and occurrence of overcharging or overdischarging. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

In the examples and comparative examples, the following methods were used to measure and evaluate the proportional contents of monomer units in a particulate polymer, the average particle diameter Da of a particulate polymer measured by dynamic light scattering, the volume-average particle diameter Db of a particulate polymer measured by laser diffraction/scattering, the glass-transition temperature of a particulate polymer, the weight-average molecular weight of an acidic water-soluble polymer contained in an aqueous phase of a binder composition, the viscousness and tackiness of a binder composition, the peel strength of a negative electrode, and the internal resistance and cycle characteristics of a lithium ion secondary battery.

### <Proportional contents of monomer units>

An intensity ratio of peaks originating from monomer units in a particulate polymer was determined by ¹H-NMR (nuclear magnetic resonance) and was converted to a mass ratio in order to determine the proportional content of each monomer unit in the particulate polymer.

### <Average particle diameter Da of particulate polymer measured by dynamic light scattering>

The pH of a binder composition was adjusted (adjusted to pH 9 in Example 7, pH 7.6 in Comparative Example 4, and pH 7 in other examples and comparative examples) through addition of sodium hydroxide as necessary.

A particle size distribution analyzer (produced by Otsuka Electronics Co., Ltd.; model: nanoSAQLA) having dynamic light scattering as a measurement principle was used to measure a particle size distribution of the pH adjusted binder composition (water dispersion of a particulate polymer) obtained as described above, and then the particle diameter (D50) at which cumulative frequency of light scattering intensity calculated from a small diameter end in the measured particle size distribution reached 50% was taken to be the average particle diameter Da. The measurement conditions in the dynamic light scattering were as follows.
Dispersion medium: Deionized water
Measurement temperature: 25 ± 1°C
Measurement concentration (solid content concentration): 0.5 mass%
Scattering angle: 168.8°
Light source laser wavelength: 660 nm

### <Volume-average particle diameter Db of particulate polymer measured by laser diffraction/scattering>

A particle size distribution analyzer (produced by Shimadzu Corporation; product name: SALD-2300) having laser diffraction/scattering as a measurement principle was used to measure a particle size distribution of an obtained binder composition (water dispersion of particulate polymer adjusted to solid content concentration of 0.1 mass%) in accordance with JIS Z 8825, and the particle diameter (D50) at which cumulative volume calculated from a small diameter end in the measured particle size distribution reached 50% was taken to be the average particle diameter Db.

### <Glass-transition temperature of particulate polymer>

A dispersion liquid containing a particulate polymer was subjected to preliminary drying in an environment having a humidity of 50% and a temperature of 23°C to 26°C for 7 days and was then subjected to preliminary film formation with a thickness of 2 ± 0.5 mm. The film obtained through this preliminary film formation was dried in a vacuum dryer at a temperature of 120°C for 10 hours. Thereafter, the dried film was taken as a sample to measure the glass-transition temperature (°C) in accordance with JIS K7121 under conditions of a measurement temperature of -100°C to 180°C and a heating rate of 5°C/min using a differential scanning calorimeter (DSC6220 produced by SII NanoTechnology Inc.).

### <Weight-average molecular weight of acidic water-soluble polymer in aqueous phase>

A binder composition was neutralized and adjusted to pH 8 with sodium hydroxide and was then air dried to obtain a dried product. A solution was then obtained by adding 0.01 mass% sodium hydroxide aqueous solution to the obtained dried product and performing 4 hours of heating at 80°C. Filter paper was used to separate an obtained filtrate by filtration and obtain an extract. Solid matter (water-soluble components) obtained through drying of this extract was used as a measurement sample to measure the weight-average molecular weight of an acidic water-soluble polymer in an aqueous phase by high-performance liquid chromatography (HPLC).

### [Molecular weight measurement conditions]

Column: TSKgel G3000PWXL + G2500PWXL produced by Tosoh Corporation
Mobile phase: 100 mM sodium nitrate/acetonitrile = 70/30 (volume ratio)
Flow rate: 1.0 mL/min
Detector: RI detector
Standard substance: Polyethylene oxide, polyethylene glycol

### <Viscousness of binder composition>

The solid content concentration of an obtained binder composition was adjusted to 30 mass% using water, the viscosity of the binder composition was subsequently measured using a B-type viscometer (produced by Toki Sangyo Co., Ltd.; product name: TVB-10; rotation speed: 60 rpm), and the viscosity was evaluated by the following standard. The temperature during viscosity measurement was 25°C. Note that a binder composition can be said to have good viscousness in a case in which the viscosity of the binder composition is not less than 10 mPa·s and not more than 3,000 mPa·s.
A: Not less than 10 mPa·s and not more than 1,500 mPa·s
B: More than 1,500 mPa·s and not more than 3,000 mPa·s
C: Less than 10 mPa·s or more than 3,000 mPa·s

### <Tackiness of binder composition>

A binder composition was applied onto copper foil such as to have a film thickness after drying of 2 µm to 10 µm and was dried at 110°C for 5 minutes to produce a binder film. The produced film was cut to dimensions of 30 mm × 20 mm to obtain a test specimen. A probe made of SUS (∅10 mm) was used to perform a pressing operation with respect to one side of the test specimen under conditions of a pressing speed of 3 mm/s, a pressing load of 100 gf, and a pressing holding time of 1 s. Next, the tack strength (N) when the SUS probe was pulled upward with a pulling speed of 3 mm/s was measured and was evaluated by the following standard. A lower tack strength results in better productivity without the occurrence of adhesion to a dryer or the like. (Note that high tack strength is undesirable not only due to the start of strong adhesion to a wall of a dryer, a conveyer, or the like and reduction of production efficiency, but also because problems such as the inability to achieve uniform quality arise). Moreover, lower tack strength results in lower adhesiveness to a roll during processing using a roll, and can be judged to indicate better roll processability.
A: Tack strength of 4 N or less
B: Tack strength of more than 4 N and not more than 8 N
C: Tack strength of 8 N or more

### <Peel strength of negative electrode>

A produced negative electrode was cut out as a rectangle of 100 mm in length by 10 mm in width to obtain a test specimen. This test specimen was placed with the surface of the negative electrode mixed material layer facing downward, and cellophane tape was affixed to the surface of the negative electrode mixed material layer. Tape prescribed by JIS Z1522 was used as the cellophane tape. Moreover, the cellophane tape was fixed to a test stage. Thereafter, one end of the current collector was pulled vertically upward at a pulling speed of 50 mm/min to peel off the current collector, and the stress during this peeling was measured. Three measurements were made in this manner, an average value of the measurements was determined, and this average value was taken to be the peel strength and was evaluated by the following standard.
A: Peel strength of 10 N/m or more
B: Peel strength of not less than 7 N/m and less than 10 N/m
C: Peel strength of less than 7 N/m

### <Internal resistance of lithium ion secondary battery>

IV resistance was measured as follows in order to evaluate internal resistance of a lithium ion secondary battery. Conditioning was performed through three repetitions of an operation of charging to a voltage of 4.2 V with a charge rate of 0.1C, resting for 10 minutes, and then constant current (CC) discharging to 3.0 V with a discharge rate of 0.1C at a temperature of 25°C. Thereafter, the lithium ion secondary battery was charged to 3.75 V at 1C (C is a value expressed by rated capacity (mA)/1 hour (h)) in a -10°C atmosphere and was then subjected to 20 seconds of charging and 20 seconds of discharging at each of 0.5C, 1.0C, 1.5C, and 2.0C, centered on 3.75 V. The battery voltage after 15 seconds at the charging side in each of these cases was plotted against the current value, and the gradient of this plot was determined as the IV resistance (Ω). The obtained IV resistance value (Ω) was evaluated by the following standard through comparison with the IV resistance in Comparative Example 4. Note that a smaller IV resistance value indicates that the secondary battery has lower internal resistance.
A: Less than 85% relative to IV resistance in Comparative Example 4
B: Not less than 85% and less than 95% relative to IV resistance in Comparative Example 4
C: Not less than 95% and less than 105% relative to IV resistance in Comparative Example 4
D: 105% or more relative to IV resistance in Comparative Example 4

### <Cycle characteristics of lithium ion secondary battery>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C, and was then subjected to 12 hours of aging at a temperature of 60°C. The lithium ion secondary battery was subsequently discharged to a cell voltage of 3.00 V by a 0.2C constant-current method at a temperature of 25°C. Thereafter, constant current (CC) constant voltage (CV) charging (upper limit cell voltage 4.20 V) was performed by a 0.2C constant-current method, and then CC discharging to 3.00 V was performed by a 0.2C constant-current method. This charging and discharging at 0.2C was repeated three times.

Thereafter, the lithium ion secondary battery was subjected to 100 cycles of a charge/discharge operation with a cell voltage of 4.20 V to 3.00 V and a charge/discharge rate of 1.0C in an environment having a temperature of 25°C. The discharge capacity of the 1^{st} cycle was defined as X1 and the discharge capacity of the 100^{th} cycle was defined as X2.

The discharge capacity X1 and the discharge capacity X2 were used to determine a capacity change rate expressed by ΔC' = (X2/X1) × 100(%), which was then evaluated by the following standard. A larger value for the capacity change rate ΔC' indicates better cycle characteristics.
A: ΔC' of 93% or more
B: ΔC' of not less than 90% and less than 93%
C: ΔC' of not less than 87% and less than 90%
D: ΔC' of less than 87%

### (Example 1)

### <Production of binder composition containing particulate polymer (batch polymerization method)>

First, in a first stage of polymerization, a 5 MPa pressure-resistant vessel equipped with a stirrer was charged with 24 parts of styrene as an aromatic vinyl monomer, 73 parts of 1,3-butadiene as an aliphatic conjugated diene monomer, 0.6 parts of an alkyl diphenyl ether disulfonic acid salt as an emulsifier, 143 parts of deionized water, 0.1 parts of tert-dodecyl mercaptan as a chain transfer agent, and 0.3 parts of potassium persulfate as a polymerization initiator for core portion formation. These materials were thoroughly stirred, were then heated to 55°C to initiate polymerization, and were reacted for 10 hours. Next, these materials were heated to 65°C and were reacted for a further 6 hours.

Next, in a second stage of polymerization, 3 parts of methacrylic acid as a carboxyl group-containing monomer for shell portion formation was added into the same pressure-resistant vessel under stirring, was heated to 85°C, and was reacted for a further 6 hours. Unreacted monomer was subsequently removed by thermal-vacuum distillation to yield a water dispersion (binder composition for a lithium ion secondary battery negative electrode) containing a particulate polymer that had a core-shell structure in which the outer surface of a core portion was at least partially covered by a shell portion.

The obtained binder composition was used to measure the proportional contents of monomer units in the particulate polymer, the average particle diameter Da of the particulate polymer measured by dynamic light scattering, the volume-average particle diameter Db of the particulate polymer measured by laser diffraction/scattering, the weight-average molecular weight of an acidic water-soluble polymer contained in an aqueous phase that was produced as a side product, and the viscosity and tackiness of the binder composition. The results are shown in Table 1.

### <Production of slurry composition for non-aqueous secondary battery negative electrode>

A planetary mixer equipped with a disper blade was charged with 100 parts of artificial graphite (tap density: 0.85 g/cm³; capacity: 360 mAh/g) as a negative electrode active material, 1 part of carbon black (produced by TIMCAL; product name: Super C65) as a conductive material, and 1.2 parts in terms of solid content of a 2% aqueous solution of carboxymethyl cellulose (produced by Daicel Corporation; product name: Daicel 2200) as a thickener to obtain a mixture. The obtained mixture was adjusted to a solid content concentration of 60% with deionized water and was subsequently mixed at 25°C for 60 minutes. Next, the mixture was adjusted to a solid content concentration of 52% with deionized water and was then further mixed at 25°C for 15 minutes to obtain a mixed liquid. Deionized water and 2.0 parts in terms of solid content of the binder composition produced as described above were added to the obtained mixed liquid, and the final solid content concentration was adjusted to 48%. A further 10 minutes of mixing was performed, and then defoaming was performed under reduced pressure to yield a slurry composition for a negative electrode having good fluidity.

### <Formation of negative electrode>

The obtained slurry composition for a negative electrode was applied onto copper foil of 15 µm in thickness serving as a current collector by a comma coater at a speed of 1.2 m/min such as to have a coating weight after drying of 10.5 mg/cm². The slurry composition for a negative electrode was dried by conveying the copper foil inside a 120°C oven for 1 minute and a 130°C oven for 1 minute at a speed of 1.2 m/min.

The resultant negative electrode web was rolled by roll pressing to obtain a negative electrode having a negative electrode mixed material layer density of 1.70 g/cm³.

The peel strength of the negative electrode was evaluated. The result is shown in Table 1.

In addition, a negative electrode for a case in which production is performed by high-speed coating was obtained by performing the same operations as described above with the exception that the speed during application of the slurry composition onto the copper foil was changed from 1.2 m/min to 3.6 m/min, the conveyance speed during drying was changed from 1.2 m/min to 3.6 m/min, and the conveyance was for 20 seconds in a 120°C oven and for 20 seconds in a 150°C oven.

The peel strength of the negative electrode when produced by high-speed coating was evaluated. The result is shown in Table 1.

### <Formation of positive electrode>

A slurry composition for a positive electrode was obtained by mixing 100 parts of LiCoO₂ having a median diameter of 12 µm as a positive electrode active material, 2 parts of acetylene black (produced by Denka Company Limited; product name: HS-100) as a conductive material, 2 parts in terms of solid content of polyvinylidene fluoride (produced by Kureha Corporation; product name: #7208) as a binder, and N-methylpyrrolidone as a solvent, adjusting these materials to a total solid content concentration of 70%, and then mixing these materials in a planetary mixer.

The obtained slurry composition for a positive electrode was applied onto aluminum foil of 20 µm in thickness serving as a current collector by a comma coater such as to have a coating weight after drying of 23 mg/cm². The slurry composition for a positive electrode was dried by conveying the aluminum foil inside a 60°C oven for 2 minutes at a speed of 0.5 m/min. Thereafter, 2 minutes of heat treatment was performed at 120°C to obtain a positive electrode web.

The positive electrode web was rolled by roll pressing to obtain a positive electrode having a positive electrode mixed material layer density of 4.0 g/cm³.

### <Preparation of separator>

A separator made of a single layer of polypropylene (produced by Celgard, LLC.; product name: Celgard 2500) was prepared as a separator formed of a separator substrate.

### <Production of lithium ion secondary battery>

The post-pressing positive electrode for a lithium ion secondary battery and the post-pressing negative electrode for a lithium ion secondary battery that were produced as described above were arranged with a separator (polypropylene microporous membrane of 20 µm in thickness) therebetween in an order of "separator/positive electrode/separator/negative electrode" to obtain a laminate. Next, the laminate of electrodes and separators was wound around a core of 20 mm in diameter to obtain a roll including a positive electrode, a separator, and a negative electrode. The obtained roll was then compressed to a thickness of 4.5 mm from one direction at a speed of 10 mm/s to obtain a flattened roll. This flattened roll had an elliptical shape in plan view, and a ratio of the major axis and the minor axis thereof (major axis/minor axis) was 7.7.

In addition, a non-aqueous electrolyte solution (LiPF₆ solution of 1.0 M in concentration; solvent: mixed solvent of ethylene carbonate (EC)/ethyl methyl carbonate (EMC) = 3/7 (mass ratio) having 2 volume% of vinylene carbonate (VC) added as an additive) was prepared.

Next, the flattened roll was housed inside a laminate case made of aluminum together with the non-aqueous electrolyte solution. After connecting a negative electrode lead and a positive electrode lead at specific locations, an opening of the laminate case was thermally sealed to produce a laminate-type lithium ion secondary battery as a non-aqueous secondary battery. Note that the obtained secondary battery had a pouch shape of 35 mm (width) × 48 mm (height) × 5 mm (thickness) and had a nominal capacity of 700 mAh.

The internal resistance and cycle characteristics of this lithium ion secondary battery were evaluated. The results are shown in Table 1.

### (Example 2)

A binder composition containing a particulate polymer, a slurry composition for a non-aqueous secondary battery negative electrode, a negative electrode, a positive electrode, and a lithium ion secondary battery were produced or prepared in the same way as in Example 1 with the exception that in production of the binder composition containing the particulate polymer, the additive amount of methacrylic acid as a carboxyl group-containing monomer was changed from 3 parts to 4 parts. Evaluations were conducted in the same manner as in Example 1. The results are shown in Table 1.

### (Example 3)

A binder composition containing a particulate polymer, a slurry composition for a non-aqueous secondary battery negative electrode, a negative electrode, a positive electrode, and a lithium ion secondary battery were produced or prepared in the same way as in Example 1 with the exception that in production of the binder composition containing the particulate polymer, the additive amount of 1,3-butadiene as an aliphatic conjugated diene monomer in the first stage of polymerization was changed from 73 parts to 73.5 parts, and the additive amount of methacrylic acid as a carboxyl group-containing monomer in the second stage of polymerization was changed from 3 parts to 2.5 parts. Evaluations were conducted in the same manner as in Example 1. The results are shown in Table 1.

### (Example 4)

A binder composition containing a particulate polymer, a slurry composition for a non-aqueous secondary battery negative electrode, a negative electrode, a positive electrode, and a lithium ion secondary battery were produced or prepared in the same way as in Example 1 with the exception that in production of the binder composition containing the particulate polymer, the additive amount of 1,3-butadiene as an aliphatic conjugated diene monomer in the first stage of polymerization was changed from 73 parts to 74 parts, and the additive amount of methacrylic acid as a carboxyl group-containing monomer in the second stage of polymerization was changed from 3 parts to 2 parts. Evaluations were conducted in the same manner as in Example 1. The results are shown in Table 1.

### (Example 5)

A binder composition containing a particulate polymer, a slurry composition for a non-aqueous secondary battery negative electrode, a negative electrode, a positive electrode, and a lithium ion secondary battery were produced or prepared in the same way as in Example 1 with the exception that in production of the binder composition containing the particulate polymer, the additive amount of styrene as an aromatic vinyl monomer was changed from 24 parts to 48.5 parts, and the additive amount of 1,3-butadiene as an aliphatic conjugated diene monomer was changed from 73 parts to 48.5 parts. Evaluations were conducted in the same manner as in Example 1. The results are shown in Table 1.

### (Example 6)

A binder composition containing a particulate polymer, a slurry composition for a non-aqueous secondary battery negative electrode, a negative electrode, a positive electrode, and a lithium ion secondary battery were produced or prepared in the same way as in Example 1 with the exception that in production of the binder composition containing the particulate polymer, 73 parts of isoprene was added instead of 73 parts of 1,3-butadiene as an aliphatic conjugated diene monomer. Evaluations were conducted in the same manner as in Example 1. The results are shown in Table 1.

### (Example 7)

A binder composition containing a particulate polymer, a slurry composition for a non-aqueous secondary battery negative electrode, a negative electrode, a positive electrode, and a lithium ion secondary battery were produced or prepared in the same way as in Example 1 with the exception that in production of the binder composition containing the particulate polymer, adjustment was performed to pH 9 instead of to pH 7. Evaluations were conducted in the same manner as in Example 1. The results are shown in Table 1.

### (Comparative Example 1)

A binder composition containing a particulate polymer, a slurry composition for a non-aqueous secondary battery negative electrode, a negative electrode, a positive electrode, and a lithium ion secondary battery were produced or prepared in the same way as in Example 1 with the exception that in production of the binder composition containing the particulate polymer, the additive amount of styrene as an aromatic vinyl monomer was changed from 24 parts to 73 parts, and the additive amount of 1,3-butadiene as an aliphatic conjugated diene monomer was changed from 73 parts to 24 parts. Evaluations were conducted in the same manner as in Example 1. The results are shown in Table 1.

### (Comparative Example 2)

A binder composition containing a particulate polymer, a slurry composition for a non-aqueous secondary battery negative electrode, a negative electrode, a positive electrode, and a lithium ion secondary battery were produced or prepared in the same way as in Example 1 with the exception that in production of the binder composition containing the particulate polymer, the additive amount of 1,3-butadiene as an aliphatic conjugated diene monomer in the first stage of polymerization was changed from 73 parts to 75 parts, and the additive amount of methacrylic acid as a carboxyl group-containing monomer in the second stage of polymerization was changed from 3 parts to 1 part. Evaluations were conducted in the same manner as in Example 1. The results are shown in Table 1.

### (Comparative Example 3)

A binder composition containing a particulate polymer, a slurry composition for a non-aqueous secondary battery negative electrode, a negative electrode, a positive electrode, and a lithium ion secondary battery were produced or prepared in the same way as in Example 1 with the exception that in production of the binder composition containing the particulate polymer, the additive amount of 1,3-butadiene as an aliphatic conjugated diene monomer in the first stage of polymerization was changed from 73 parts to 66 parts, and the additive amount of methacrylic acid as a carboxyl group-containing monomer in the second stage of polymerization was changed from 3 parts to 10 parts. Evaluations were conducted in the same manner as in Example 1. The results are shown in Table 1.

### (Comparative Example 4)

A slurry composition for a non-aqueous secondary battery negative electrode, a negative electrode, a positive electrode, and a lithium ion secondary battery were produced or prepared in the same way as in Example 1 with the exception that a binder composition containing a particulate polymer that was produced as described below was used. Evaluations were conducted in the same manner as in Example 1. The results are shown in Table 1.

### <Production of binder composition containing particulate polymer>

A binder composition containing a particulate polymer was obtained through two-stage polymerization as follows.

In a first stage of polymerization, a reactor was charged with 211 parts of water, 80 parts by mass of a monomer mixture containing 39 parts of 1,3-butadiene, 28 parts of styrene, 5 parts of methyl methacrylate, 5 parts of acrylonitrile, 2 parts of itaconic acid, and 1 part of acrylic acid, 0.1 parts of t-dodecyl mercaptan as a chain transfer agent, 1 part of sodium alkyl diphenyl ether disulfonate as an emulsifier, and 0.2 parts of potassium persulfate as a polymerization initiator, 18 hours of polymerization was performed at 60°C under stirring, and the reaction was ended at a polymerization conversion rate of 96%.

Next, in a second stage of polymerization, 189 parts of water, 2 parts of methacrylic acid, 10 parts of 1,3-butadiene, 8 parts of styrene, 0.05 parts by mass of potassium persulfate as a polymerization initiator, and 0.1 parts by mass of sodium carbonate were added into the reactor, a polymerization reaction was continued at 80°C for 2 hours, and then the reaction was ended. The polymerization conversion rate at this point was 98%. After removal of unreacted monomer and concentrating of the resultant latex of a particulate polymer (water dispersion of a particulate polymer), the solid content concentration and pH thereof were adjusted through addition of 10% sodium hydroxide aqueous solution and water to yield a pH 7.6 binder composition for a lithium ion secondary battery negative electrode containing the particulate polymer in a proportion of 20%.

### (Example 8)

A binder composition containing a particulate polymer, a slurry composition for a non-aqueous secondary battery negative electrode, a negative electrode, a positive electrode, and a lithium ion secondary battery were produced or prepared in the same way as in Example 1 with the exception that in production of the binder composition containing the particulate polymer, 3 parts of acrylic acid was used instead of 3 parts of methacrylic acid as a carboxyl group-containing monomer. Evaluations were conducted in the same manner as in Example 1. The results are shown in Table 2.

### (Example 9)

A binder composition containing a particulate polymer, a slurry composition for a non-aqueous secondary battery negative electrode, a negative electrode, a positive electrode, and a lithium ion secondary battery were produced or prepared in the same way as in Example 1 with the exception that in production of the binder composition containing the particulate polymer, the additive amount of 1,3-butadiene as an aliphatic conjugated diene monomer in the first stage of polymerization was changed from 73 parts to 72.7 parts, and 0.3 parts of N-methylolacrylamide as a cross-linkable group-containing hydrophilic monomer was further added in the second stage of polymerization. Evaluations were conducted in the same manner as in Example 1. The results are shown in Table 2.

### (Example 10)

A binder composition containing a particulate polymer, a slurry composition for a non-aqueous secondary battery negative electrode, a negative electrode, a positive electrode, and a lithium ion secondary battery were produced or prepared in the same way as in Example 1 with the exception that in production of the binder composition containing the particulate polymer, the additive amount of styrene as an aromatic vinyl monomer was changed from 24 parts to 62 parts, the additive amount of 1,3-butadiene as an aliphatic conjugated diene monomer was changed from 73 parts to 33 parts, and 4 parts of itaconic acid as a carboxyl group-containing monomer and 1 part of 2-hydroxyethyl acrylate (solubility in water: 1,000,000 mg/L) as a hydrophilic monomer that does not include a carboxyl group were further added in the first stage of polymerization, and 3 parts of methacrylic acid as a carboxyl group-containing monomer was not added in the second stage of polymerization so as to form a random copolymer that did not have a core-shell structure. Evaluations were conducted in the same manner as in Example 1. In addition, the glass-transition temperature of the particulate polymer that was obtained as described above was measured. The results are shown in Table 2.

### (Example 11)

A binder composition containing a particulate polymer, a slurry composition for a non-aqueous secondary battery negative electrode, a negative electrode, a positive electrode, and a lithium ion secondary battery were produced or prepared in the same way as in Example 1 with the exception that in production of the binder composition containing the particulate polymer, the additive amount of styrene as an aromatic vinyl monomer was changed from 24 parts to 23 parts and 1 part of 2-hydroxyethyl methacrylate (solubility in water: 1,000,000 mg/L) as a hydrophilic monomer that does not include a carboxyl group was further added in the first stage of polymerization. Evaluations were conducted in the same manner as in Example 1. In addition, the glass-transition temperature of the particulate polymer that was obtained as described above was measured. The results are shown in Table 2.

### (Example 12)

A binder composition containing a particulate polymer, a slurry composition for a non-aqueous secondary battery negative electrode, a negative electrode, a positive electrode, and a lithium ion secondary battery were produced or prepared in the same way as in Example 1 with the exception that in production of the binder composition containing the particulate polymer, the additive amount of styrene as an aromatic vinyl monomer was changed from 24 parts to 21 parts and 3 parts of methyl methacrylate (solubility in water: 15,000 mg/L) as a hydrophilic monomer that does not include a carboxyl group was further added in the first stage of polymerization. Evaluations were conducted in the same manner as in Example 1. In addition, the glass-transition temperature of the particulate polymer that was obtained as described above was measured. The results are shown in Table 2.

### (Example 13)

A binder composition containing a particulate polymer, a slurry composition for a non-aqueous secondary battery negative electrode, a negative electrode, a positive electrode, and a lithium ion secondary battery were produced or prepared in the same way as in Example 12 with the exception that in production of the binder composition containing the particulate polymer, 3 parts of acrylamide (solubility in water: 2,040,000 mg/L) was used instead of 3 parts of methyl methacrylate (solubility in water: 15,000 mg/L) as a hydrophilic monomer that does not include a carboxyl group in the first stage of polymerization. Evaluations were conducted in the same manner as in Example 1. In addition, the glass-transition temperature of the particulate polymer that was obtained as described above was measured. The results are shown in Table 2.

### (Example 14)

A binder composition containing a particulate polymer, a slurry composition for a non-aqueous secondary battery negative electrode, a negative electrode, a positive electrode, and a lithium ion secondary battery were produced or prepared in the same way as in Example 12 with the exception that in production of the binder composition containing the particulate polymer, 3 parts of M-90G produced by Shin-Nakamura Chemical Co., Ltd. (corresponding to polyethylene oxide structure-containing monomer of formula (I) in which R¹ is a methyl group, R² is a methyl group, and n = 9; solubility in water: 1,000,000 mg/L) was used instead of 3 parts of methyl methacrylate (solubility in water: 15,000 mg/L) as a hydrophilic monomer that does not include a carboxyl group in the first stage of polymerization. Evaluations were conducted in the same manner as in Example 1. In addition, the glass-transition temperature of the particulate polymer that was obtained as described above was measured. The results are shown in Table 2.

### (Example 15)

A binder composition containing a particulate polymer, a slurry composition for a non-aqueous secondary battery negative electrode, a negative electrode, a positive electrode, and a lithium ion secondary battery were produced or prepared in the same way as in Example 12 with the exception that in production of the binder composition containing the particulate polymer, 3 parts of hydroxyethylacrylamide (solubility in water: 1,000,000 mg/L) was used instead of 3 parts of methyl methacrylate (solubility in water: 15,000 mg/L) as a hydrophilic monomer that does not include a carboxyl group in the first stage of polymerization. Evaluations were conducted in the same manner as in Example 1. In addition, the glass-transition temperature of the particulate polymer that was obtained as described above was measured. The results are shown in Table 2.

### (Example 16)

A binder composition containing a particulate polymer, a slurry composition for a non-aqueous secondary battery negative electrode, a negative electrode, a positive electrode, and a lithium ion secondary battery were produced or prepared in the same way as in Example 12 with the exception that in production of the binder composition containing the particulate polymer, 3 parts of acrylonitrile (solubility in water: 70,000 mg/L) was used instead of 3 parts of methyl methacrylate (solubility in water: 15,000 mg/L) as a hydrophilic monomer that does not include a carboxyl group in the first stage of polymerization. Evaluations were conducted in the same manner as in Example 1. In addition, the glass-transition temperature of the particulate polymer that was obtained as described above was measured. The results are shown in Table 2.

### (Example 17)

A binder composition containing a particulate polymer, a slurry composition for a non-aqueous secondary battery negative electrode, a negative electrode, a positive electrode, and a lithium ion secondary battery were produced or prepared in the same way as in Example 16 with the exception that in production of the binder composition containing the particulate polymer, the additive amount of styrene as an aromatic vinyl monomer was changed from 21 parts to 23 parts and the additive amount of acrylonitrile as a hydrophilic monomer that does not include a carboxyl group was changed from 3 parts to 1 part. Evaluations were conducted in the same manner as in Example 1. In addition, the glass-transition temperature of the particulate polymer that was obtained as described above was measured. The results are shown in Table 2.

### (Example 18)

A binder composition containing a particulate polymer, a slurry composition for a non-aqueous secondary battery negative electrode, a negative electrode, a positive electrode, and a lithium ion secondary battery were produced or prepared in the same way as in Example 17 with the exception that in production of the binder composition containing the particulate polymer, 73 parts of isoprene was used instead of 73 parts of 1,3-butadiene as an aliphatic conjugated diene monomer. Evaluations were conducted in the same manner as in Example 1. In addition, the glass-transition temperature of the particulate polymer that was obtained as described above was measured. The results are shown in Table 2.

### (Example 19)

A binder composition containing a particulate polymer, a slurry composition for a non-aqueous secondary battery negative electrode, a negative electrode, a positive electrode, and a lithium ion secondary battery were produced or prepared in the same way as in Example 1 with the exception that in production of the slurry composition for a non-aqueous secondary battery negative electrode, the additive amount of artificial graphite as a negative electrode active material was changed from 100 parts to 93 parts and 7 parts of a silicon-based negative electrode active material (SiOₓ) was further added. Evaluations were conducted in the same manner as in Example 1. The results are shown in Table 2.

### (Example 20)

A binder composition containing a particulate polymer, a slurry composition for a non-aqueous secondary battery negative electrode, a negative electrode, a positive electrode, and a lithium ion secondary battery were produced or prepared in the same way as in Example 17 with the exception that in production of the slurry composition for a non-aqueous secondary battery negative electrode, the additive amount of artificial graphite as a negative electrode active material was changed from 100 parts to 93 parts and 7 parts of a silicon-based negative electrode active material (SiOₓ) was further added. Evaluations were conducted in the same manner as in Example 1. The results are shown in Table 2.

In Tables 1 and 2:
"St" indicates styrene;
"BD" indicates 1,3-butadiene;
"IP" indicates isoprene;
"MAA" indicates methacrylic acid;
"AA" indicates acrylic acid;
"IA" indicates itaconic acid;
"AN" indicates acrylonitrile;
"MMA" indicates methyl methacrylate;
"NMA" indicates N-methylolacrylamide;
"2HEA" indicates 2-hydroxyethyl acrylate;
"2HEMA" indicates 2-hydroxyethyl methacrylate;
"Aam" indicates acrylamide;
"M-90G" indicates M-90G produced by Shin-Nakamura Chemical Co., Ltd. (corresponding to polyethylene oxide structure-containing monomer of formula (I) in which R¹ is a methyl group, R² is a methyl group, and n = 9); and
"HEAam" indicates hydroxyethylacrylamide.

**[Table 1]**

| | | | | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|---|---|---|
| | | | Aromatic vinyl monomer | Type | St | St | St | St | St | St | St | St | St | St | St |
| | | | | Amount [parts by mass] | 24 | 24 | 24 | 24 | 48.5 | 24 | 24 | 73 | 24 | 24 | 28 |
| | | | Aliphatic conjugated diene monomer | Type | BD | BD | BD | BD | BD | IP | BD | BD | BD | BD | BD |
| | | | | Amount [parts by mass] | 73 | 72 | 73.5 | 74 | 48.5 | 73 | 73 | 24 | 75 | 66 | 39 |
| | | | Carbxyl group containing monomer | Type | - | - | - | - | - | - | - | - | - | - | AA |
| | | | | Amount [parts by mass] | - | - | - | - | - | - | - | - | - | - | 1 |
| | | | | Type | - | - | - | - | - | - | - | - | - | - | IA |
| Binder composition for non-aqueous secondary battery electrode | Particulate polymer | Added in first stage of polymerization | | Amount [parts by mass] | - | - | - | - | - | - | - | - | - | - | 2 |
| | | | Nitrile group-containing monomer | Type | - | - | - | - | - | - | - | - | - | - | AN |
| | | | | Amount [parts by mass] | - | - | - | - | - | - | - | - | - | - | 5 |
| | | | (Meth)acrylic acid alkyl ester monomer | Type | - | - | - | - | - | - | - | - | - | - | MMA |
| | | | | Amount [parts by mass] | - | - | - | - | - | - | - | - | - | - | 5 |
| | | Added in second stage of polymerization | Carboxyl group-containing monomer | Type | MAA | MAA | MAA | MAA | MAA | MAA | MAA | MAA | MAA | MAA | MAA |
| | | | | Amount [parts by mass] | 3 | 4 | 2.5 | 2 | 3 | 3 | 3 | 3 | 1 | 10 | 2 |
| | | | Aromatic vinyl monomer | Type | - | - | - | - | - | - | - | - | - | - | St |
| | | | | Amount [parts by mass] | - | - | - | - | - | - | - | - | - | - | 8 |
| | | | Aliphatic conjugated diene monomer | Type | - | - | - | - | - | - | - | - | - | - | BD |
| | | | | Amount [parts by mass] | - | - | - | - | - | - | - | - | - | - | 10 |
| | | | Aromatic vinyl monomer unit | Type | St | St | St | St | St | St | St | St | St | St | St |
| | | | | Proportion [mass%] | 24 | 24 | 24 | 24 | 48.5 | 24 | 24 | 73 | 24 | 24 | 36 |
| | | | Aliphatic conjugated diene monomer unit | Type | BD | BD | BD | BD | BD | IP | BD | BD | BD | BD | BD |
| | | | | Proportion [mass%] | 73 | 72 | 73.5 | 74 | 48.5 | 73 | 73 | 24 | 75 | 66 | 49 |
| | | | Carboxyl group-containing monomer unit | Type | MAA | MAA | MAA | MAA | MAA | MAA | MAA | MAA | MAA | MAA | MAA |
| | | | | Proportion [mass%] | 3 | 4 | 2.5 | 2 | 3 | 3 | 3 | 3 | 1 | 10 | 2 |
| | | Proportional contents of monomer units | | Type | - | - | - | - | - | - | - | - | - | - | AA |
| | | | | Proportion [mass%] | - | - | - | - | - | - | - | - | - | - | 1 |
| | | | | Type | - | - | - | - | - | - | - | - | - | - | IA |
| | | | | Proportion [mass%] | - | - | - | - | - | - | - | - | - | - | 2 |
| | | | Nitrile group-containing monomer unit | Type | - | - | - | - | - | - | - | - | - | - | AN |
| | | | | Proportion [mass%] | - | - | - | - | - | - | - | - | - | - | 5 |
| | | | (Meth)acrylic acid alkyl ester monomer unit | Type | - | - | - | - | - | - | - | - | - | - | MMA |
| | | | | Proportion [mass%] | - | - | - | - | - | - | - | - | - | - | 5 |
| | | Volume-average particle diameter Db measured by laser diffiaction/scattering [nm] | | | 130 | 130 | 130 | 130 | 130 | 130 | 130 | 130 | 130 | 130 | 190 |
| | | Average particle diameter Da measured by dynamic light scattering [nm] | | | 220 | 250 | 180 | 140 | 200 | 220 | 250 | 200 | 130 | 300 | 240 |
| | | Da/Db | | | 1.69 | 1.92 | 1.38 | 1.08 | 1.54 | 1.69 | 1.92 | 1.54 | 1.00 | 2.31 | 1.26 |
| | | Glass-transition temperature [°C] | | | -52 | -52 | -53 | -54 | -19 | -52 | -52 | 32 | -55 | -44 | -19 |
| | Weight-average molecular weight of acidic water-soluble polymer in aqueous phase | | | | 2000 | 4000 | 1000 | 500 | 2000 | 2000 | 2000 | 2000 | <500 | 30000 | <500 |
| | pH | | | | 7 | 7 | 7 | 7 | 7 | 7 | 9 | 7 | 7 | 7 | 7.6 |
| Type of negative electrode active material | | | | | Artificial graphite | Artificial graphite | Artificial graphite | Artificial graphite | Artificial graphite | Artificial graphite | Artificial graphite | Artificial graphite | Artificial graphite | Artificial graphite | Artificial graphite |
| | Tackiness ofbinder composition | | | | B | A | B | B | B | B | B | C | A | A | B |
| | Peel strength of negative electrode | | | | A | A | A | B | B | A | A | C | C | A | C |
| | Peel strength of negative electrode when produced by high-speed coating | | | | A | A | A | C | B | A | A | C | C | A | C |
| Evaluation | Internal resistance of secondary battery | | | | A | A | A | B | A | A | A | B | C | C | C |
| | Viscousness ofbinder composition | | | | A | B | A | A | A | A | B | A | A | C | A |
| | Cycle characteristics of secondary battery | | | | A | A | A | B | A | A | A | B | B | B | B |

**[Table 2]**

| | | | | | Example 8 | Example 9 | Example 10 | Example 11 | Example 12 | Example 13 | Example 14 | Example 15 | Example 16 | Example 17 | Example 18 | Example 19 | Example 20 |
|---|---|---|---|---|---|---|---|---|---|---|---|---|---|---|---|---|---|
| | | Added in first stage of polymerization | Aromatic vinyl monomer | Type | St | St | St | St | St | St | St | St | St | St | St | St | St |
| | | | | Amount [parts by mass] | 24 | 24 | 62 | 23 | 21 | 21 | 21 | 21 | 21 | 23 | 23 | 24 | 23 |
| | | | Aliphatic conjugated diene monomer | Type | BD | BD | BD | BD | BD | BD | BD | BD | BD | BD | IP | BD | BD |
| | | | | Amount [parts by mass] | 73 | 72.7 | 33 | 73 | 73 | 73 | 73 | 73 | 73 | 73 | 73 | 73 | 73 |
| | | | Carboxyl group-containing monomer | Type | - | - | IA | - | - | - | - | - | - | - | - | - | - |
| | | | | Amount [parts by mass] | - | - | 4 | - | - | - | - | - | - | - | - | - | - |
| | | | Hydrophilic monomer not including carboxyl group-containing monomer | Type | - | - | 2HEA | 2HEMA | MMA | Aam | M-90G | HEAam | AN | AN | AN | - | AN |
| | | | | Amount [parts by mass] | - | - | 1 | 1 | 3 | 3 | 3 | 3 | 3 | 1 | 1 | - | 1 |
| | Particulate polymer | | Carboxyl group-containing monomer | Type | AA | MAA | - | MAA | MAA | MAA | MAA | MAA | MAA | MAA | MAA | MAA | MAA |
| | | | | Amount [parts by mass] | 3 | 3 | - | 3 | 3 | 3 | 3 | 3 | 3 | 3 | 3 | 3 | 3 |
| Binder composition for non-aqueous secondary battery electrode | | Added in second stage of polymerization | Cross-linkable group-containing hydrophilic monomer | Type | - | NMA | - | - | - | - | - | - | - | - | - | - | - |
| | | | | Amount [parts by mass] | - | 0.3 | - | - | - | - | - | - | - | - | - | - | - |
| | | | Aromatic vinyl monomer unit | Type | St | St | St | St | St | St | St | St | St | St | St | St | St |
| | | | | Proportion [mass%] | 24 | 24 | 62 | 23 | 21 | 21 | 21 | 21 | 21 | 23 | 23 | 24 | 23 |
| | | | Aliphatic conjugated diene monomer unit | Type | BD | BD | BD | BD | BD | BD | BD | BD | BD | BD | IP | BD | BD |
| | | | | Proportion [mass%] | 73 | 72.7 | 33 | 73 | 73 | 73 | 73 | 73 | 73 | 73 | 73 | 73 | 73 |
| | | Proportional contents of monomer units | Carboxyl group-containing monomer unit | Type | AA | MAA | IA | MAA | MAA | MAA | MAA | MAA | MAA | MAA | MAA | MAA | MAA |
| | | | | Proportion [mass%] | 3 | 3 | 4 | 3 | 3 | 3 | 3 | 3 | 3 | 3 | 3 | 3 | 3 |
| | | | Hydrophilic monomer unit not incnding carboxyl group-containing monomer | Type | - | - | 2HEA | 2HEMA | MMA | Aam | M-90G | HEAam | AN | AN | AN | - | AN |
| | | | | Proportion [mass%] | - | - | 1 | 1 | 3 | 3 | 3 | 3 | 3 | 1 | 1 | - | 1 |
| | | | Cross-linkable group-containing hydrophilic monomer unit | Type | - | NMA | - | - | - | - | - | - | - | - | - | - | - |
| | | | | Proportion [mass%] | - | 0.3 | - | - | - | - | - | - | - | - | - | - | - |
| | | Volume-average particle diameter Db measured by laser diffraction/scattering [nm] | | | 130 | 130 | 140 | 130 | 130 | 130 | 130 | 130 | 130 | 130 | 130 | 130 | 130 |
| | | Average particle diameter Da measured by dynamic light scattering [nm] | | | 230 | 220 | 160 | 220 | 220 | 220 | 220 | 220 | 220 | 220 | 220 | 220 | 220 |
| | | DalDb | | | 1.77 | 1.69 | 1.14 | 1.69 | 1.69 | 1.69 | 1.69 | 1.69 | 1.69 | 1.69 | 1.69 | 1.69 | 1.69 |
| | | Glass-transition temperature [°C] | | | -52 | -52 | -15 | -52 | -52 | -52 | -54 | -52 | -52 | -52 | -52 | -52 | -52 |
| | Weight-average molecular weight of acidic water-soluble polymer in aqueous phase | | | | 2000 | 8000 | 500 | 2000 | 2000 | 3000 | 2000 | 2000 | 2000 | 2000 | 2000 | 2000 | 2000 |
| | pH | | | | 7 | 7 | 7 | 7 | 7 | 7 | 7 | 7 | 7 | 7 | 7 | 7 | 7 |
| Type of negative electrode active material | | | | | Artificial graphite | Artificial graphite | Artificial graphite | Artificial graphite | Artificial graphite | Artificial graphite | Artificial graphite | Artificial graphite | Artificial graphite | Artificial graphite | Artificial graphite | Artificial graphite + SiOx | Artificial graphite + SiOx |
| Evaluation | Tackiness of binder composition | | | | B | A | A | A | A | A | B | A | A | A | A | B | A |
| | Peel strength of negative electrode | | | | A | A | B | A | A | A | A | A | A | A | A | A | A |
| | Peel strength of negative electrode when produced by high-speed coating | | | | A | A | B | A | A | A | A | A | A | A | A | A | A |
| | Internal resistance of secondary battery | | | | A | A | A | A | A | A | A | A | A | A | A | A | A |
| | Viscousness of binder composition | | | | A | A | A | A | A | A | A | A | A | A | A | A | A |
| | Cycle characteristics of secondary battery | | | | A | A | A | A | A | A | A | A | A | A | A | A | A |

It can be seen from Tables 1 and 2 that in the case of the binder compositions of Examples 1 to 20, which each contain a particulate polymer that includes an aromatic vinyl monomer unit, an aliphatic conjugated diene monomer unit, and a carboxyl group-containing monomer unit in specific proportions, that has a ratio (Da/Db) of average particle diameter Da measured by dynamic light scattering and volume-average particle diameter Db measured by laser diffraction/scattering that is within a specific range, and that has a volume-average particle diameter Db that is within a specific range, these binder compositions have good viscousness and are capable of forming an electrode having excellent peel strength.

In contrast, it can be seen that the peel strength of a formed electrode is poor when using the binder composition of Comparative Example 1 in which the proportional contents of an aromatic vinyl monomer unit and an aliphatic conjugated diene monomer unit in the particulate polymer deviate from specific ranges.

Moreover, it can be seen that the peel strength of a formed electrode is poor when using the binder composition of Comparative Example 2 in which the proportional content of a carboxyl group-containing monomer unit in the particulate polymer does not satisfy a specific range and the ratio (Da/Db) of Da and Db does not satisfy a specific range.

Furthermore, it can be seen that in the case of the binder composition of Comparative Example 3 in which the proportional content of a carboxyl group-containing monomer unit in the particulate polymer exceeds a specific range and the ratio (Da/Db) of Da and Db exceeds a specific range, this binder composition does not have good viscousness.

Also, it can be seen that the peel strength of a formed electrode is poor when using the binder composition of Comparative Example 4 in which the volume-average particle diameter Db of the particulate polymer exceeds a specific range.

### INDUSTRIAL APPLICABILITY

According to the present disclosure, it is possible to provide a binder composition for a non-aqueous secondary battery electrode that has good viscousness and is capable of forming an electrode for a non-aqueous secondary battery having excellent peel strength.

Moreover, according to the present disclosure, it is possible to provide a slurry composition for a non-aqueous secondary battery electrode that is capable of forming an electrode for a non-aqueous secondary battery having excellent peel strength.

Furthermore, according to the present disclosure, it is possible to provide an electrode for a non-aqueous secondary battery having excellent peel strength and a non-aqueous secondary battery including this electrode for a non-aqueous secondary battery.

## Claims

1. A binder composition for a non-aqueous secondary battery electrode comprising a particulate polymer, wherein
the particulate polymer includes an aromatic vinyl monomer unit in a proportion of not less than 5 mass% and not more than 65 mass%, an aliphatic conjugated diene monomer unit in a proportion of not less than 30 mass% and not more than 90 mass%, and a carboxyl group-containing monomer unit in a proportion of not less than 2 mass% and not more than 9 mass%,
a ratio Da/Db of an average particle diameter Da of the particulate polymer measured by dynamic light scattering and a volume-average particle diameter Db of the particulate polymer measured by laser diffraction/scattering is not less than 1.05 and not more than 2.0, and
the volume-average particle diameter Db of the particulate polymer is not less than 100 nm and not more than 170 nm.

2. The binder composition for a non-aqueous secondary battery electrode according to claim 1, wherein the particulate polymer further includes a hydrophilic monomer unit that does not include a carboxyl group.

3. The binder composition for a non-aqueous secondary battery electrode according to claim 1, wherein the particulate polymer further includes a cross-linkable group-containing hydrophilic monomer unit.

4. The binder composition for a non-aqueous secondary battery electrode according to claim 1, having a pH of not lower than 6 and not higher than 10.

5. The binder composition for a non-aqueous secondary battery electrode according to claim 1, comprising an aqueous phase that contains an acidic water-soluble polymer, wherein
the acidic water-soluble polymer has a weight-average molecular weight of not less than 500 and not more than 20,000.

6. The binder composition for a non-aqueous secondary battery electrode according to claim 1, wherein the average particle diameter Da of the particulate polymer is not less than 100 nm and not more than 340 nm.

7. A slurry composition for a non-aqueous secondary battery electrode comprising: an electrode active material; and the binder composition for a non-aqueous secondary battery electrode according to any one of claims 1 to 6.

8. An electrode for a non-aqueous secondary battery comprising an electrode mixed material layer formed using the slurry composition for a non-aqueous secondary battery electrode according to claim 7.

9. A non-aqueous secondary battery comprising a positive electrode, a negative electrode, a separator, and an electrolyte solution, wherein
at least one of the positive electrode and the negative electrode is the electrode for a non-aqueous secondary battery according to claim 8.
